(19) Europäisches Patentamt

European Patent Office

Office européen des brevets

(11) **EP 1 240 534 B1**

(12) **EUROPÄISCHE PATENTSCHRIFT**

(45) Veröffentlichungstag und Bekanntmachung des Hinweises auf die Patenterteilung:
**08.02.2006 Patentblatt 2006/06**

(51) Int Cl.:
*G01V 7/10* *(2006.01)*     *G01N 3/32* *(2006.01)*

(21) Anmeldenummer: **98928167.0**

(22) Anmeldetag: **19.05.1998**

(86) Internationale Anmeldenummer:
**PCT/DE1998/001379**

(87) Internationale Veröffentlichungsnummer:
**WO 1999/060425 (25.11.1999 Gazette 1999/47)**

(54) **ELASTISCHES KRAFTLAGER FÜR EINARMIGE TORSIONSWAAGEN UND TORSIONSSCHWEREPENDEL**

ELASTIC BEARING FOR ONE-ARMED TORSION BALANCES AND TORSION PENDULUM

COUSSINET ELASTIQUE POUR BALANCES DE TORSION A UN SEUL BRAS ET PENDULES DE TORSION

(84) Benannte Vertragsstaaten:
**AT CH DE ES FR GB GR IT LI NL PT SE**

(43) Veröffentlichungstag der Anmeldung:
**18.09.2002 Patentblatt 2002/38**

(73) Patentinhaber: **Gregor, Manfred Alexander**
**18012 Rostock (DE)**

(72) Erfinder: **Gregor, Manfred Alexander**
**18012 Rostock (DE)**

(56) Entgegenhaltungen:
- **BRAGINSKIJ, V B; PANOV, V I: "Verifcation of the equivalence of inertial and gravitational mass" ZHURNAL EKSPERIMENTAL'NOI I SOVIET PHYSICS JETP, Bd. 34, Nr. 3, März 1972, Seiten 463-466, XP002092548**
- **GILLIES G T ET AL: "TORSION BALANCES, TORSION PENDULUMS, AND RELATED DEVICES" REVIEW OF SCIENTIFIC INSTRUMENTS, Bd. 64, Nr. 2, 1. Februar 1993, Seiten 283-309, XP000349050**
- **WEGENER ALFRED: 'Müller Pouillets Lehrbuch der Physik 11. Auflage Fünfter Band - Erste Hälfte Physik der Erde Seiten 737,738', 1928, VIEWEG, BRAUNSCHWEIG (DE)**
- **DEFANT ALBERT: 'Ebbe und Flut des Meeres der Atmosphäre und der Erdfeste Seiten 27-33', 1953, SPRINGER, BERLIN (DE)**
- **JORDAN; EGGERT; KNEISSL: 'Handbuch der Vermessungskunde 10. Auflage Band Va Gravimetrische Instrumente und Messmethoden Anton Graf Seiten 234-241', 1967, METZLERSCHE, STUTTGART (DE)**

**EP 1 240 534 B1**

**Beschreibung**

Die Erfindung betrifft ein elastisches Kraftlager für Einarmige Torsionswaagen und Torsionsschwerependel für Nanorelativtechnologie.

**1. Die technische Aufgabenstellung vor dem Hintergrund bekannter hochgenauer meßtechnischer Lösungen für Industrie und Wissenschaft**

Mit Torsions-Schwingungsgeräten zur Darstellung der Wirkung von Torsionsmomenten für die Werkstoffprüfung sind freie Torsionsschwingungen anzuregen. Solche Geräte sind etwa nach DIN 53445 bekannt. Diese werden z.B. von der chemischen Industrie zur Bestimmung von Schubmodul, Scherung, Steifheit, sowie ähnlicher Material-Kenngrößen eingesetzt.

Torsionswaagen oder Drehwaagen sowie Torsionspendel sind extrem hochempfindliche Meßgeräte, weil dabei die sehr kleine Kraft der Verdrillung eines oft nur extrem dünnen Fadens für die Messung kleinster Kraftmomente genutzt wird. Gemeinsame Kennzeichen solcher allgemein bekannter technischer Lösungen sind:

a) Es gibt nur eine Torsionswelle: Ein Torsionsschwingungsgerät hat einen Torsionsstab; die Drehwaage einen Torsionsfaden.

b) Die Torsionswelle ist an einem Ende fest eingespannt. Das andere Ende hängt frei beweglich ins Schwerefeld. Hierbei sind vielfältige spezielle Variationen bekannt:

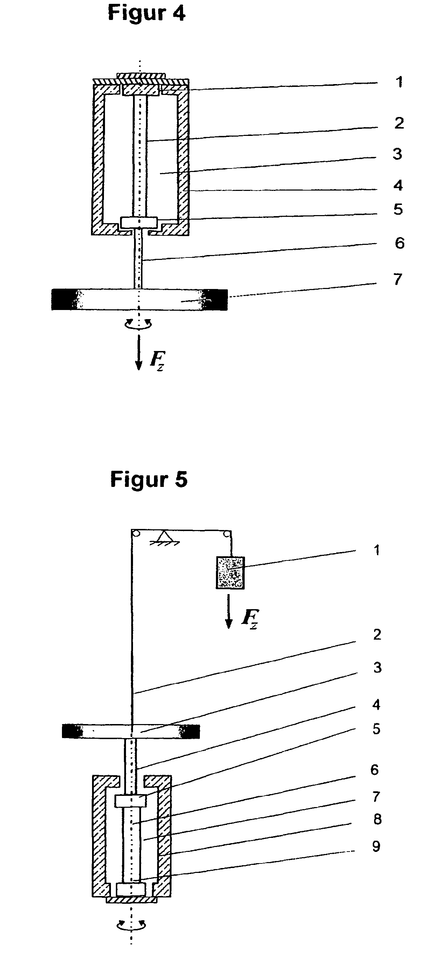

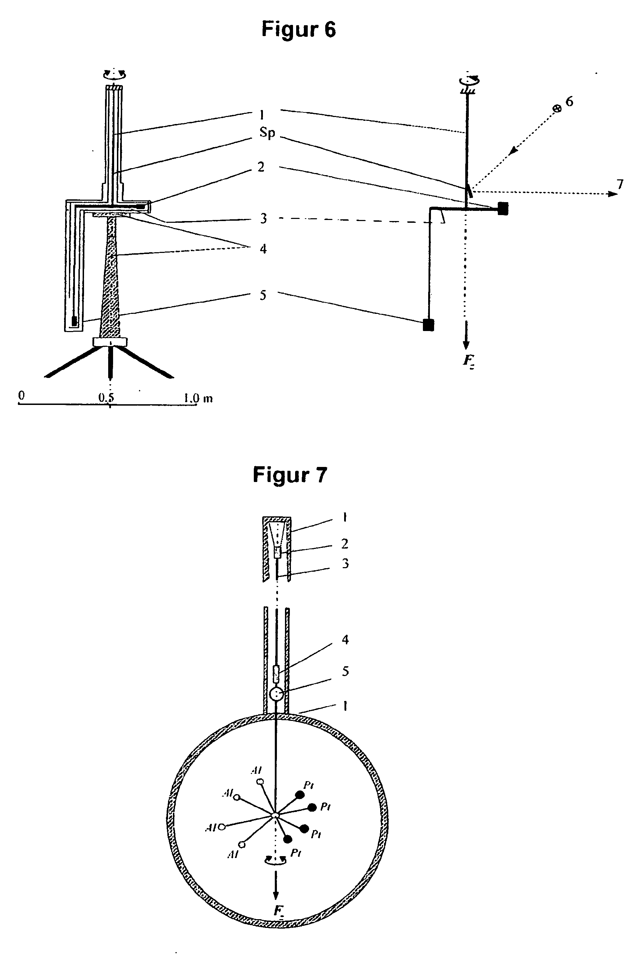

- Bei Werkstoffprüfungen bildet oft der Prüfkörper selbst die Torsionswelle; dabei kann eine Schwungscheibe von symmetrischer Form und homogener Dichte sowohl unterhalb der Torsionswelle anhängen als auch oberhalb davon befestigt sein. Das Prinzip solcher Torsionsprüfgeräte zeigen die Figuren 4 und 5.
- Für Präzisionsmessungen hängt der Faden einer Torsionswaage oder eines Torsionspendels mit seinem unteren Ende frei beweglich im Schwerefeld, daran hängt ausbalanciert im statischem Gleichgewicht ein "Wäge" balken, oder ein Drehkreuz, o.ä., und an deren Enden wiederum befinden sich Gewichte, die entweder als "angezogene" Testmassen dienen - Figur 7 -, oder als Eichmassen wie bei Schwerebestimmungen - Figur 6 -; usw..

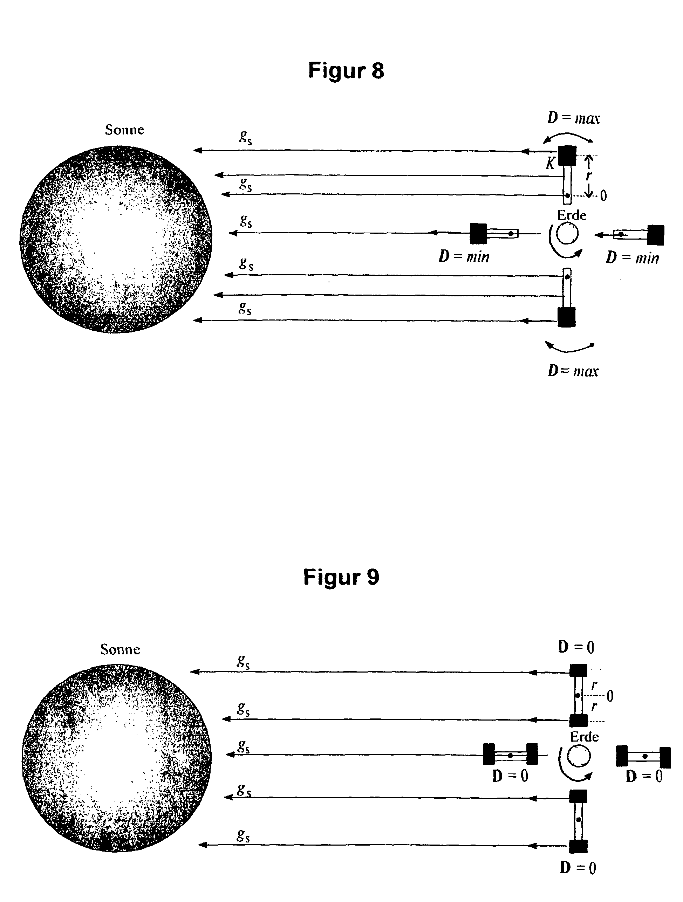

Torsions-Schwingungsgeräte für Präzisionsmessungen sind Geräte der Wahl für Geologie, Gravimetrie, Seismik, oder für Grundlagenforschungen der modernen Naturwissenschaft. Beispielsweise war eine viel genutzte technische Anordnung zur Erkundung geologischer Lagerstätten durch Vermessung von räumlichen lokalen Variationen der Feldstärke des Erdschwerefeldes jene nach Figur 6: Am Querbalken der Torsionswaage von Eötvös (1900) hängen neutrale Körper auf verschiedener Höhe. Die Richtung und die Stärke der Schwere der Erde hängt von der Höhe ab als auch von der Massendichte der Körper in der näheren Umgebung. Daher sind mittels mehrfacher Wechsel des Aufstellungsortes der Drehwaage kleine Unterschiede der Anziehungskräfte der Erde auf diese Körper hervorzubringen, die mit diesem Instrument durch kleine Änderungen des Drehwinkels zu messen sind. Ganz im Gegensatz dazu sind am Drehkreuz des Torsionspendels (Fig. 7) von BRAGINSKI/PANOW (1972) Aluminium- und Platin-Körper von ungleichem Gewicht je Volumeneinheit auf gleicher Höhe im Schwerefeld angehängt, jedoch in ungleichem Abstand vom Torsionsfaden, so daß hier ebenfalls statisches Gleichgewicht der Gewichtskräfte besteht. Der Zweck dieser Anordnung erinnert an ein bekanntes Experiment von I. NEWTON, jedoch heute mit Horizontalpendel im Vakuum statt damals mit Vertikalpendel in Luft, um den Unterschied von träger oder schwerer Masse durch Vergleich der Schwingzeit eines leichten Pendels gegen ein schweres Pendel bei gleichem Schwerpunktabstand und bei gleicher äußerer Formgebung zu prüfen. Das Ergebnis war damals negativ. Zur möglichst genauen Prüfung der Erwartung der allgemeinen Relativitätstheorie, daß es sogar physikalisch prinzipiell keinen solchen Unterschied gebe, wurde das Experiment mittels Horizontalpendel verfeinert, und es wurde außerdem die Anziehungskraft der Sonne statt der Erde auf die Aluminium- und Platinkörper genutzt. Es genügt jedoch nicht, in solcherart technischer einfachster Weise ungleiche Gewichte je Volumeneinheit zur Wirkung zu bringen, um damit schon einen Unterschied von träger Masse und von schwerer Masse zur Messung zu bringen. Weil es so einfach nicht ist, darum wurde das alte Ergebnis damit also noch viel genauer als ehedem erneut erhalten. Ein weiterer wichtiger Grund, warum diese gesuchten physikalischen Effekte mit derartigen technischen Anordnungen meßtechnisch mit Sicherheit nicht zu erfassen sind, weil sie damit physikalisch immer verschwindend klein zu machen sind -praktisch also zu Null-, ist dabei übrigens schon durch einen einzigen Blick auf die Figuren 8 und 9 klar.

- Magnetische Drehwaagen funktionieren in analoger Weise, jedoch statt mit neutralen Gewichtskörpern mit magnetischen Körpern regelmäßig an Torsions-Spannbändern; diese Geräte werden heute jedoch kaum noch verwendet.
- Elektrostatische Drehwaagen besitzen als Unterschiedsmerkmal eine Torsionswelle oder einen Torsionsfaden aus Isoliermaterial, woran Körper mit elektrischen Ladungen anzuhängen sind; diese werden inzwischen nur noch für Demonstrationszwecke und in der Experimentalphysik verwendet.

Ein allgemeines Kennzeichen aller dieser hochgenauen Meßinstrumente ist, daß die Drehachse entlang der neutralen Faserdes Torsionsfadens und die verlängerte vertikale Gerade der Schwerkraft durch den gemeinsamen Schwerpunkt der Torsionskörper, wie Waagebalken, Drehkreuz, Schwungscheibe, usw., in jedem Augenblick praktisch immer miteinander deckungsgleich zusammenfallen. Der Grund dafür ist, daß ein dünner Faden nur kleine Widerstandskraft gegen Verbiegen hat. Das bedingt die große Instabilität im Meßbetrieb als gemeinsamer Nachteil aller Torsionsgeräte, die mittels eines solchen bekannten elastischen Einfaden-Lagers technisch hergestellt sind. Schon ein kleines Übergewicht genügt, und der Waagebalken kippt. Eine Torsionswaage von dieser Bauart versagt daher physikalisch und funktioniert technisch nicht, wenn der Schwerpunkt des Torsionskörpers außerhalb der Drehachse liegt.

Genau das aber ist die Bedingung, deren Erfüllung physikalisch prinzipiell zu fordern ist für die Schaffung eines Kraftfeldantriebes, der mit Kraftmomenten beliebiger Kraftfelder stabil funktioniert, also auch mit solchen weitreichender neutraler Kraftfelder. Sowohl diese physikalische Bedingung als auch die dafür zu lösende technische Aufgabe sind durch die Figur 8 schematisch vereinfacht veranschaulicht worden: Figur 9 stellt den vorgenannten gegenwärtigen Stand zum direkten Vergleich gegenüber. Hierin zeigt sich, daß diese technische Aufgabe mittels bekannter Lagertechnik der vorerwähnten Meßinstrumente einer herkömmlichen Präzisionsmessung von kleinsten Wirkungsgrößen von Kräften technisch nicht zu lösen ist. Dieser Antrieb ist aber wichtig, weil damit Wirkungen auch solcher Kraftfelder zu nutzen und zu registrieren sind, die im Vergleich zum Erdschwerefeld auf der Erdoberfläche eine in der Zeit zwar nur langsam, stetig, und kontinuierlich wechselnde neutrale Kraft hervorbringen; - dafür dieses jedoch im Raum infolge ihrer Neutralität durchdringend tun bis zu jedem Ort sowohl im Innersten der Erde als auch bis ins Zentrum jedes ihrer Atome: Durch die Lösung dieser technischen Aufgabe ist somit z.B. auch das Kraftfeld der Sonne zu einer stetigen Energiequelle für einen solchen erfindungsgemäßen neutralen Kraftfeldantrieb zu machen.

Daß das technische Funktionsprinzip bekannter Dreh waagen dafür keine Anknüpfungspunkte bietet, veranschaulicht Figur 9: Der Versuch, mit der Anziehungskraft der Sonne ein Drehmoment zu erzeugen, muß dabei physikalisch prinzipiell ein negatives Ergebnis haben, weil der resultierende Angriffspunkt der Anziehungskraft der Sonne dabei nahe bei dem Schwerpunkt des Gewichtes der durch die Gravitation der Sonne dorthin angezogenen Körper liegt. Wenn also so, wie es dabei der Fall ist, in jedem Moment der Schwerpunkt und die Drehachse der Körper praktisch in einer Linie zusammenfallen, dann wirkt dabei physikalisch selbstverständlich trotzdem das neutrale Kraftfeld linksdrehend und rechtsdrehend. Aber es erzeugt technisch dadurch in jedem Moment in genau entgegengesetzte Richtungen drehende Kraftmomente. Darum addieren deren Wirkungen sich für den ganzen Drehkörper praktisch zu Null. Darum auch beharren für den Beobachterder Torsions balken der Torsionswaage von EÖTVÖS (Fig. 6) oder das Drehkreuz des Torsionspendels von BRAGINSKI/PANOW (Fig.7) mit bestenfalls kleinsten Schwankungen bis zu der hohen Meßgenauigkeit kleinster Änderungen des Drehwinkels von $10^{-9}$ bis $10^{-12}$ in einem mittleren konstanten Zustand von relativer Ruhe von beharrender Masse oder träger Masse im statischen Gleichgewicht von nach links unten und nach rechts unten ziehenden Gewichtskräften. Daß auf diesem viel begangenen Weg daher physikalisch wie technisch nicht zu Sicherheit der Erfahrung und der Messung der universellen Wirkung weitreichender neutraler Kraftfelder auf neutrale Masse der Körper in einem einheitlichen Gravitations- und Rotationskraftfeld zu kommen ist, das liegt damit offen zutage. Die dafür wichtige Erfahrung, daß große Massen wie Erde, Sonne, Monde, usw. physikalisch ganz allgemeingültig stets mehr oder weniger sowohl miteinander gravitieren als auch umeinander rotieren, ist heutzutage längst allgemein bekannt, wird aber technisch regelmäßig nicht genutzt: Daß eine solche allgemeine Wechselwirkung durch beliebige neutrale Masse somit auch jedes Meßkörpers wirkt, liegt dabei dadurch klar auf der Hand, daß dadurch jedes neutrale Kraftfeld, und somit insbesondere auch das der Sonne, in jeder um eine raumfeste Achse schwingenden neutralen Masse links- und rechtsdrehende Kraftmomente erzeugt. Jedoch sind starke Wirkungen solcher Teil-Momente mit bekannten technischen Anordnungen wie Torsionswaagen nicht zu erfahren, weil sich dabei links- und rechtsdrehende Momente (Fig. 9) im Mittel gegenseitig aufheben, nämlich einesteils wegen der Fernparallelität der Anziehungskräfte in der Richtung einer fernen Kraftquelle eines weitreichenden Kraftfeldes, andernteils wegen der Nahsymmetrie der Gewichte der Körper bezüglich einer lotrechten Drehachse im starken neutralen Nahkraftfeld der Erdschwere. Mit so funktionierenden "dynamischen" Torsionspendeln oder "statischen" Torsionswaagen sind zwar freie Torsionsschwingungen für eine bestimmte Zeitdauer anzuregen, wonach diese bekanntlich auf eine physikalisch unbestimmte Größe von "praktisch Null" abklingen. Daß auf solche Weise und auf solcher Grundlage jedoch keine Torsionsmaschine mit neutralem Kraftfeldantrieb technisch herzustellen ist, womit diese allgemeine Wechselwirkung zu wiederholbarer Wirkung in meßbarer Größenordnung zu bringen ist, das ist dabei schon fast von selbst klar. Daß im Ergebnis der Lösung dieser erfindungsgemäßen technischen Aufgabe dann im Speziellen auch Meßgeräte technisch herzustellen sind, womit um Größenordnungen außerhalb dieses Unbestimmtheitsbereiches bekannter hochgenauer Meßtechnologie zu kommen ist, so daß damit auch neue physikalische Erfahrungen anzubieten sind, das muß man dabei wohl nicht mehr besonders betonen.

Ein charakteristisches Unterscheidungsmerkmal des diesbezüglich wesentlich verschiedenen erfindungsgemäßen physikalischen und technischen Grundprinzips zur Schaffung eines neutralen Kraftfeldantriebs ist dabei in Figur 8 zu sehen: In einem neutralen Kraftfeld von fast-parallelen Massenanziehungs-Kraftlinien, wie z.B. dem Sonnenkraftfeld, ist ein a symmetrischer übergewichtiger Drehträger statt eines symmetrisch gleichgewichtigen Drehbalkens positioniert. Dieser dreht sich durch die allgemeine Rotation aller Körper auf der Erdoberfläche abwechselnd maximal oder minimal zu der währenddessen fest bleibenden Richtung der neutralen Feldlinien der allgemeinen Gravitation zwischen ganzem Erdkörper und ganzem Sonnenkörper. Hierdurch kommt die physikalische universelle neutrale Wechselwirkung unabhängiger neutraler Kraftfelder sowie unabhängiger neutraler Masse durch rotierende träge Masse und gravitierende schwere Masse physikalisch ganz von selbst zur Wirkung durch ein relativ starkes Kraftmoment. Im Speziellen ist daraus auch abzulesen, daß sich die Wechselwirkung mit dem Kraftfeld der Sonne dabei durch eine langsame Dreh- und Driftbewegung des Drehträgers von einer Wiederholungsperiode von etwa 6 Stunden zu erkennen gibt.

Die technische Aufgabe, die dabei für die technische Nutzung dieser physikalischen Ressource zu lösen ist, besteht darin, eine technische Anordnung zu schaffen, womit der Drehpunkt von träger Masse eines Drehkörpers und der Massenschwerpunkt von schwerer Masse dieses gleichen Körpers als eines Gewichtskörpers, woran die Anziehungskraft sowohl der gravitierenden Masse der Sonne als auch der gravitierenden Masse der Erde angreifen, voneinander zutrennen sind. Genau das aber ist technisch unmöglich zu erreichen mit einem Torsionsfaden, wie bei der Drehwaage, oder mit einem Torsionsstab, wie bei einem Torsionsschwingungsgerät. Trennen muß man aber, denn nur so ist zwischen Drehpunkt und Schwerpunkt jener Abstand $r_s$ physikalisch zu schaffen und technisch herzustellen, der den "Kraftarm" bildet, womit eine neutrale Kraft $F_A$ eines neutralen Kraftfeldes, wie dem der Sonne, außerhalb des Drehpunktes durch ein durch die neutrale Wechselwirkung von neutralem Kraftfeld und neutraler Masse stabil erhalten bleibendes neutrales Kraftmoment wirken kann. Indem mittels der im Nachfolgenden genauer beschriebenen erfindungsgemäßen technischen Maßnahmen hierbei dafür gesorgt wird, daß dieses in an sich bekannter Weise dem Rückstellmoment eines elastischen Materials der Lagerungs- und Torsionsachsen dieses Drehkörpers entgegenwirken kann, ist damit dann eine Schwingung und Wechselwirkung physikalisch künstlich anzuregen, die auf diese Weise keine mechanisch angeregte freie Schwingung mehr ist, sondern eine durch neutrale Wechselwirkung generierte Bewegung ist. Es scheint übrigens so, daß dieses beim heutigen Stand der Technik gegenwärtig wohl auch der einzige praktisch gangbare Weg sein dürfte, um ein technisch nutzbares Kraftmoment $M_A$ durch derartige Feldkraftmomente zu erzeugen, weil diese selbst natürlich physikalisch prinzipiell unmeßbar klein sind, und dieses auch bleiben. Dennoch, auf diese Weise sind diese technisch zur Summation und dadurch wie eine neutrale Generatorkraft in einer neutralen Krafterzeugungsmaschine zur Wirkung zu bringen, und in dieser technisch nutzbar gemachten Form dann letztlich fast so wie eine gewöhnliche mechanische Antriebskraft

$$M_A = F_A\, r_s$$

eines gewöhnlichen Drehkörpers zu beschreiben. Wenn man sonst nichts weiter ins Auge faßt als nur diese summarische Wirkung, so hängt dieses Antriebsmoment in erster Ordnung nur ab von der Größe der Anziehungsbeschleunigung $g_s$ eines bestimmten neutralen Kraftfeldes, z.B. der Sonne, auf die hierdurch beschleunigte Masse $m$, sowie von der Länge $r_s$ des künstlich geschaffenen Abstandes zwischen Schwerpunkt von schwerer gravitierender Masse und Drehpunkt von träger rotierender Masse des Drehkörpers

$$M_A = m\, g_s\, r_s$$

Die wirkende Antriebskraft ist dann einfachstenfalls bestimmt durch angezogene Masse des Körpers gleich seiner ganzen Gewichtsmasse und Anziehungsbeschleunigung eines neutralen Kraftfeldes, also nach bekanntem Vorbild im einfachsten Falle durch eine mit dem zweiten Bewegungsgesetz von NEWTON formgleiche Proportion und Bestimmungsgleichung von Masse, Kraft, und Beschleunigung:

$$F_A = m\, g_s$$

Eine der dabei zu lösenden technischen schwierigsten Aufgaben besteht somit darin, daß dafür eine technische Anordnung herzustellen ist, womit die viel stärkere Feldwirkung der Erd-Schwerkraft, die durch die Erd-Schwerebeschleunigung $g_z$ ein Übergewicht $F_z$ des Drehkörpers und hierdurch ein starkes Kippmoment $M_z$ in die Richtung zur Erdoberfläche bewirkt

$$M_z = m\, g_z\, r \qquad\qquad\qquad M_z = F_z\, r_s$$

in jedem Moment der Dreh- und Torsionsbewegung stabil zu kompensieren ist, so daß der Körper nicht fällt, sondern dauerhaft frei schwebt im Schwerefeld der Erde in einem festem Abstand um die Drehachse und um diese leicht und ungestört dreht in einem Zustand von praktischer Gewichtslosigkeit oder Schwerelosigkeit. Dafür sind natürlich auch noch Störkräfte abzuhalten bzw. zu dämpfen. Hierfür ist es besonders wichtig, dabei das unstetige Kräftespiel mechanischer Reaktionskräfte herauszuhalten, das zwischen zueinander bewegten Oberflächen in beweglichen Lagern durch den Wechsel von Haftreibung zu Gleitreibung physikalisch unvermeidlich auftritt; - beispielsweise durch eine geeignete Gestaltung der Torsionswellenlager. Wenn alles das gelingt, dann ist die technische Aufgabenstellung gelöst, und dann funktioniert eine so hergestellte erfindungsgemäße technische Anordnung mit einem neutralen Kraftfeldantrieb als eine torsionsgestützte Krafterzeugungsmaschine und hochempfindliche neutrale Generatormaschine mit einer dementsprechenden kleinen Generatorleistung hochstabil im Bereich der milliardstel der Einheit von Bewegung und Leistung, das heißt, in der allgemeinen Nanodimension aller Größen.

Das, was mithilfe von bekannter feinmechanischer hochempfindlicher Meßtechnik in dieser heute aktuellen Größenordnung der Erfahrung der Natur also angenähert gerade noch so zu messen ist, aber damit regelmäßig schon nicht mehr sicher zu reproduzieren ist, genau das ist damit sogar extrem empfindlich wiederholbar in genau diesem Nanobereich der Erfahrung zu generieren. Daß damit im Speziellen dann auch Meßgeräte technisch herzustellen sind, womit in diesem Bereich um Größenordnungen genauer zu messen ist, ist dabei von selbst klar. Die charakteristischen technischen Merkmale der erfindungsgemäßen Lösung dieser technischen Aufgabenstellung werden im Nachfolgenden näher erläutert und genauer beschrieben.

## 2. Beschreibung des Elastischen Kraftlagers am Beispiel von damit hergestellten torsionsgestützten neutralen Generatormaschinen wie Einarmige Torsionswaagen

### 2.1 Aufbau und Funktionsweise eines Elastischen Mehrwellentorsionsgetriebes zur Erhaltung eines asymmetrischen übergewichtigen Geräteträgers im Schwebezustand

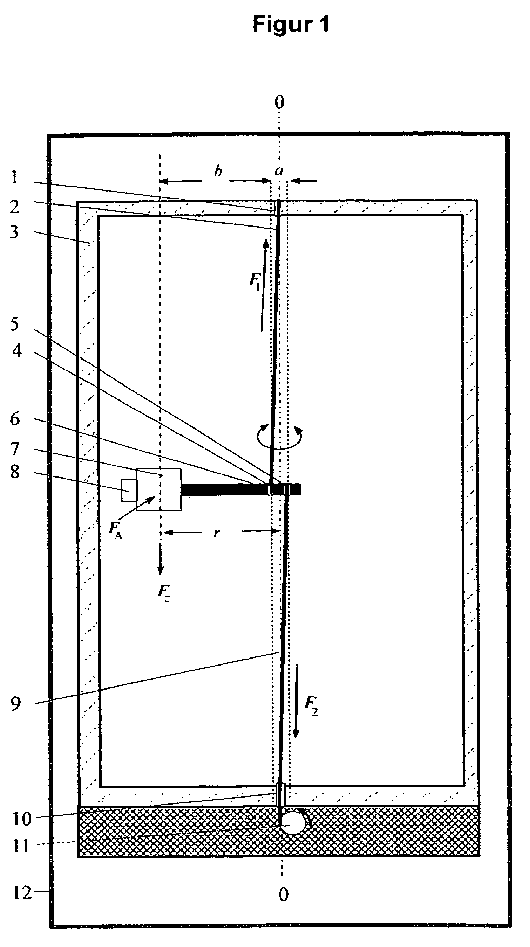

Die erfindungsgemäße technische Lösung, wie im Patentanspruch zusammenfassend gekennzeichnet, wird nachfolgend zunächst durch die Beschreibung der Anordnung im Zusammenwirken ihrer kennzeichnenden Hauptbauteile - hierzu Figuren 1,2,3 - und die Erläuterung von deren Funktionsweise charakterisiert. Anschließend werden unterschiedliche Vorzugslösungen genauer beschrieben und verschiedene Teile dieser Lösungen durch technische ausgewählte Angaben näher bestimmt, danach werden Prototypen der Einarmigen Torsionswaage beschrieben sowie charakteristische Ergebnisse der technischen Erprobung. Abschließend wird mit technischen vergleichbaren Merkmale bekannter technischer Lösungen verglichen, und die technische Charakteristik der erfindungsgemäße technischen Lösung durch diesbezügliche Unterscheidungsmerkmale gegeben.

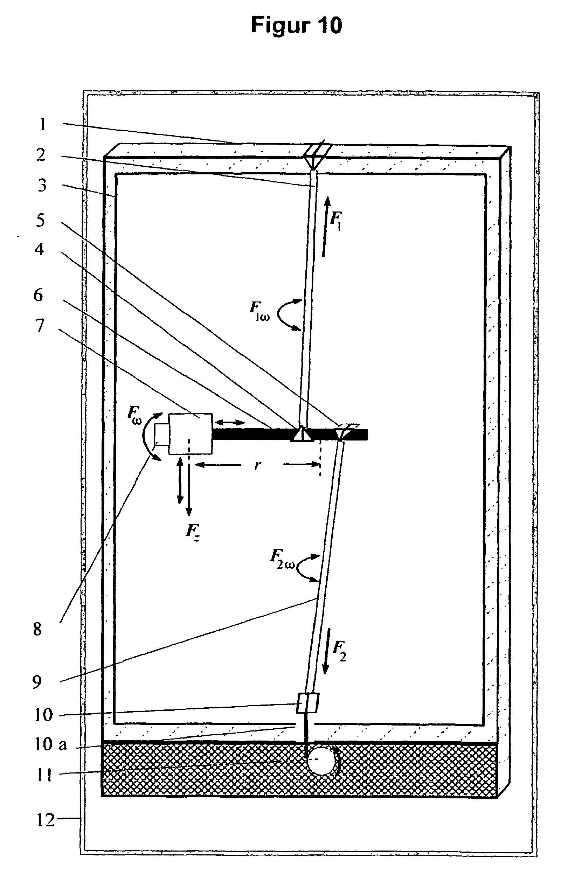

Die erfindungsgemäße technische Anordnung, womit wie vorstehend physikalisch prinzipiell gefordert ein schwerer Körper in einem festen Abstand ($r_s$) um die Drehachse im Schwerefeld der Erde andauernd im Zustand der Schwebung stabil zu erhalten ist, besteht aus einem relativ unbewegten starren Rahmen (3), worin ein elastisches Torsionstriebwerk in Gestalt eines Torsionsgetriebes aus mehreren Fasern (2,9) angeordnet ist, das Halte- und Zugkräfte sowie Drehungs- und Torsionskräfte eines relativ bewegten starren Trägers (6) in deren Längsrichtung sowie in deren Querrichtung aufnimmt, und diese zwischen dem beweglichen starren Träger (6) und dem relativ unbeweglichen starren Rahmen (3) überträgt. Erfindungsgemäß ist an der einen Seite dieses inneren Trägers (6) ein schwerer Kolben (7) montiert, so daß ein übergewichtiger Träger entsteht. Auf der gegenüberliegenden Seite nehmen unbewegliche feste Lager die elastischen Getriebewellen (2;9) auf. Diese Lager sind z.B. Bohrungen, worin auf einer Lochseite Torsionsfasern rutschfest festsitzen, z.B. einklemmen, und auf der anderen Lochseite als kraftführende, energieübertragende, und um kleine Beträge in alle Richtungen des Raumes frei bewegliche Führungs- und Torsionswellen (2;9) austreten. Diese wesentlichen Hauptbestandteile dieser technischen Anordnung sowie die Grundzüge der Wirkungsweise eines damit hergestellten Mehrwellentor sionsgetriebes oder Torsionstriebwerkes veranschaulicht Figur 1 im Überblick: Eine obere Getriebewelle (2) ist zwischen beschwerendem Kolben (7) und unbeschwertem Ende des Trägers im vorderen Trägerlager (4) verankert, und knapp dahinter eine untere Getriebewelle (9) in möglichst kleinem Abstand *"a"* in einem hinteren Trägerlager (5). Die obere Faser (2) ist etwa so lang, daß sie bis zur Mitte des Rahmens reicht. Mittels einer Spannvorrichtung (11) als eine charakteristische technische Hauptkomponente wird nach dem Einhängen des Trägers in die Faserlager die untere Faser straff gespannt: Hierdurch beginnt die obere Faser sich auch zu straffen, und nach dem Erreichen der Dehngrenze (Streckgrenze) des Materials der Fasern beginnen deren Lager als ein Hebelarm zu wirken, womit durch fortgesetztes immer weiteres Spannen der unteren Faser nun die entgegengesetzte Seite des Trägers mit dem schweren Kolben (7) immer weiter hochzuhebeln ist, bis der Kolben zuletzt in der Horizontebene stabil schwebt. In diesem Moment ist der stabile Schwebezustand des übergewichtigen Trägers in der Horizontebene zwischen den Lagern erreicht, und nun läuft dieser wie gefordert leicht und ungestört um die vertikale Torsions- und Drehhauptachse (0) um. Die mittlere Hauptachse verläuft dabei regelmäßig ungefähr in der Mitte zwischen den Trägerlagern (4,5) und etwa in der Mitte der Rahmenlager (1,10) des umschließenden starren Rahmens; beide Merkmale sind in den Figuren 1 bis 3 sowie in Figur 10 veranschaulicht worden. Um diese Achse dreht der schwere Kolben in diesem Zustand jetzt mit kleinster Kraft, weil jetzt die Wirkung seines Schwerkraft-Kippmomentes durch das gegenwirkende starke Kraftmoment der Zugkräfte in der Längsrichtung der elastischen Getriebewellen vollständig kompensiert worden ist. Er hat jetzt nur noch das sehr kleine Verdrillungsmoment der Fasern in der Querrichtung der Faserachse zu überwinden, das den Träger samt Kolben in einer bestimmten Richtung festzuhalten bestrebt ist. Darum kann sich der Torsionskörper schon unter der Wirkung von kleinsten Kraftmomenten von direkt auf seine neutrale Masse einwirkenden Kräften von neutralen Kraftfeldern nun ungestört bewegen und frei drehen, so daß diese in diesem Zustand neutrale stabile Antriebsmomente der Bewegung des Trägers physikalisch hervorbringen und solche in einer für technische sowie meßtechnische Zwecke brauchbaren Größenordnung generieren.

Damit ist die gestellte technische Aufgabe gelöst: Der Kraftfeldantrieb des Kolbens kann unter diesen Bedingungen in der Horizontebene als die bevorzugte Torsionsdrehungsebene jetzt schon mit der Wirkung kleinster Antriebskräfte durch Kraftmomente beliebiger Kraftfelder funktionieren, welche stark genug sind, die sehr kleine gegenwirkende resultierende Verdrehungskraft aller straff gespannten elastischen Fasern des Torsionsgetriebes zu überwinden, beziehungsweise das sehr kleine resultierende Rückstellungsmoment des Mehrwellentorsionsgetriebes. Eine Instabilität infolge wechselnder Reibungskräfte beim Kraftschluß in den beweglichen Lagern im Träger bleibt dabei erfindungsgemäß durch Beschränkung auf die Haftreibungskraft unbeweglicher elastischer Lager heraus, was den Form- und Kraftschluß zwischen Faser und Unterlage noch unterstützt. Mittels der Verwendung von solcherart praktisch nur an den Enden unbeweglicher, aber dazwischen in jeder Stelle des ganzen Torsionskörpers stetig und kontinuierlich um kleinste Beträge beweglicher elastischer Torsionslager und Torsionswellen wird das erfindungsgemäße Ziel technisch erreicht, nämlich die technische Summation kleinster Wirkungen von stetigen Feldstärkeänderungen, weil diese hierbei ungestört geschieht durch kleinste unstetige Kraftspiele, wie sie bei einer anderen Herstellungsweise, etwa bei der Verwendung von Kugellagern oder von Schneide-Pfanne-Lagern, dann technisch unvermeidlich in bekannter Weise auftreten. Der Torsionskolben wird hierdurch in eine entsprechende stetige Bewegung versetzt, sobald die Summe aller solcher an sich unmeßbar kleinen Wirkungen auf einem Niveau der Gesamtwirkung des Trägers durch Feldkräfte angesammelt ist, das größer als die ebenfalls extrem kleine Gegenwirkung des Rückstellmomentes des ganzen elastischen Torsionsgetriebes ist. Die Ausführung eines erfindungsgemäßen Torsionswellenlagers als unbewegliches festes elastisches Lager liegt dadurch klar auf der Hand: Ein solches Lager kann z.B. mittels Führungsbohrung mit Konus-Klemmsitz für die Faser ausgebildet sein, jedoch regelmäßig nicht als bewegliches Lager wie Wälzlager, Schneide-Pfannen-Lager, Kugellager, o.ä., weil damit dievorgenannten extrem hohen Anforderungen an die Lagerungstechnik eines torsionsgestützten Schwebungskörpers technisch nicht zu erfüllen sind, der erst auf diese Weise erfindungsgemäß zur Generatormaschine wird, indem er sich erst hierdurch auf der physikalischen Grundlage physikalisch prinzipiell unmöglich abschirmbarer kleinster neutraler Kräfte in unaufhörlicher Bewegung um seine Drehachse zu erhalten vermag.

Dieses Kennzeichen macht beim gegenwärtigen Stand der Technik daher schon ein charakteristisches wesentliches Unterscheidungsmerkmal für einen auf diese Art und Weise hergestellten Schwebekörper-Antrieb und neutralen Generator aus, indem dieser durch die damit zu habenden Naturkräfte automatisch und "kostenlos" arbeitet, über die physikalisch aber nicht zu verfügen ist durch die Verwendung von bekannter Lagertechnik (originaler Patentanspruch 1 der Erstbeschreibung). Der besondere technische Vorteil, der hierdurch zu erlangen ist, zeigt sich unter anderem in der sprunghaften Steigerung der Meßbarkeit von den kleinsten Größen von Driftbewegungen sogleich um mehrere Größenordnungen, was in diesem Bereich des Messens so bisher noch nicht erzielt worden ist; - dieses Merkmal zeigen genauer die nachfolgenden Ausführungsbeispiele zu den Prototypen.

Wünscht man jedoch keine neutrale Generatormaschine herzustellen, sondern ein Torsionsschwingungsgerät beispielsweise für die Materialprüfung zu produzieren, wobei es regelmäßig nicht auf die Ausschöpfung der vollen Wirksamkeit, und auch nicht auf allerhöchste Empfindlichkeit ankommt (originaler Patentanspruch 2), dann ist das damit technisch natürlich auch machbar, und sogar sehr vorteilhaft und vielfältig zu machen, weil dafür selbstverständlich mit bekannter Lagertechnik zu kombinieren ist: Für einen bequemen Wechsel von Testwellen sind beispielsweise Schneide-Pfannen-Lager, Kugellager, usw., in ein auf die vorstehend beschriebene Art und Weise technisch hergestelltes Elastisches Kraftlager an beliebiger gewünschter Stelle einzusetzen. Wie man dabei genau verfährt, das richtet sich danach, was genau damit erreicht werden soll. Ein Beispiel dafür zeigt die Figur 10, wo ein erfindungsgemäßes Elastisches Kraftlager mit mehrfacher Schneidenlagerung kombiniert worden ist, und zwar sowohl oben am KraftlagerRahmen (1), wie auch mittig am Geräte-Träger (4,5), als auch im unteren Testkörper (10).

Mit den ersten Prototypen von neutralen Generatoren oder neutralen Kraftfeldmaschinen, die in dieser Art mittels Elastischer Kraftlager hergestellt worden sind, haben sich beispielsweise Antriebsmomente ergeben von etwa 0,001 N je 1° Drehwinkel für einen schweren Testkörper von 0,31 kg Gewichtsmasse, der in horizontaler Ebene um die Torsionsachse des Elastischen Kraftlagers frei schwebt. Es gehört dabei zur Erfindung, daß mittels des Elastischen Kraftlagers ein in freier Schwebung erhaltenes komplettes MeBsystem hergestellt wird, indem zur Registrierung der Bewegungsgrößen und zur Messung der Winkelgrößen auch Laserstrahler direkt auf den Träger montiert sind, wodurch diese sich schwebend mit diesem im Erdschwerefeld mitbewegen: Auf diese Weise wurden Winkelauflösungen von etwa 0,01° erhalten. Die erste Bestimmung einer neutralen Beschleunigung für träge Masse durch die Form des Bewegungsgesetzes für ein mittels des Elastischen Kraftlagers von seiner Gewichtskraft technisch künstlich entlasteten, und damit physikalisch künstlich in einen Zustand von praktischer Gewichtslosigkeit oder Schwerelosigkeit versetzten Meßsystems einer so aus Träger, Kolben, Laser, usw. bestehenden Einarmigen Torsionswaage ergab im Echtzeitbetrieb im Zustand einer solcherart künstlich erhaltenden dauerhaften freien Schwebung im Schwerefeld der Erde in horizontaler Richtung um die Drehachse des Kraftlagers ein mittleres konstantes Niveau der Gesamtwirkung des Antriebes in der Größenordnung von "Mikrometer je Sekundenquadrat" von bis zu etwa 0,000032 m/s$^2$.

Die davon unabhängige astronomische Bestimmung von einer unabhängigen neutralen Beschleunigung von schwerer Masse durch das Gravitationsgesetz statt durch das Bewegungsgesetz läßt bekanntlich für die Körper auf der Erdoberfläche für die Momente der Übereinstimmung, bzw. der Parallelität, von horizontaler Drehebene der irdischen Körper und von der Ebene der Umlaufbahn der Erde um die Sonne in der Richtung zur Sonne eine mittlere konstante Beschleunigung von etwa 6 Millimeter je Sekundenquadrat - 0,006 m/s$^2$ - zu erwarten: Das ist aber schon 200-fach größer, als physikalisch zu bestimmen ist durch diese technisch stabil erhaltene mittlere konstante AntriebsBeschleunigung von träger Masse des Drehträgers in freier Schwebung im Erdschwerefeld von etwa 32 Mikrometer je Sekundenquadrat. Daß es unter diesen Umständen also zu einer physikalisch künstlich erhaltenen neutralen Wechselwirkung kommt, deren Wirkungen hier in einen Bereich von extrem langsamer Relativbewegung von Körpern von extrem kleinen Bewegungsgrößen fallen, die mit den bekannten technischen Mitteln physikalisch nicht darzustellen sind, die durch die erfindungsgemäßen technischen Maßnahmen aber auf eben diese Weise physikalisch sicher darzustellen sind, und die damit meßtechnisch präzise zu registrieren sind, das ist angesichts solcher Relationen schon ganz offenkundig zu erkennen. In der rein technischen Hinsicht bedeutet das, daß die vorstehend zunächst grundsätzlich beschriebene technische Lösung die physikalischen Wirkungen eines neutralen Kraftfeldes - wie eben der Sonne - in einer Größenordnung zur Erfahrung bringt, und diese mit einer Sicherheit und Wiederholbarkeit zu registrieren ermöglicht, die von den bekannten hochempfindlichen Kraftmeßgeräten und Bewegungsmeßgeräten, die mittels bekannter Lagerungstechnik technisch hergestellt sind, um Größenordnungen verfehlt wird. Dieses Merkmal ergibt daher eine meßtechnische ausgezeichnete Unterscheidung und charakteristische Abgrenzung gegen das entsprechende Merkmal bekannter Meßtechnologie für hochgenaue Messungen von der Schwere und von der Bewegung, wie

- Torsionswaagen zur Messung von Schweregradienten von EÖTVÖS (Fig. 6), hergestellt technisch mittels herkömmlichem elastischen Einfadenlager, oder
- Torsionspendel zur Prüfung relativistischer Erwartungen von BRAGINSKI/PANOW (Fig. 7), hergestellt mittels herkömmlichem elastischen Einfadenlager,

sowie gegen andere wohlbekannte Mittel der Wahl in diesem Meßbereich, wie etwa

- Horizontalpendel zur Messung von mikroseismischer Bewegung, technisch hergestellt regelmäßig entweder mittels ZÖLLNER'scher elastischer Spannbandlager, dem die im Patentanspruch benannten Merkmale des Elastischen Kraftlagers fehlen, oder mittels spezieller Spitzenlager nach dem Vorbild von DE REUSEUR-PASCHWITZ,
- Schwerependel zur Messung von Erdbebenaktivität oder zur Absolutbestimmung der Schwere der Erde, die technisch hergestellt sind mittels regelmäßig völlig anders gekennzeichneter Lagertechnologie, wie oberflächenbewegliche Spitzen-, Schneiden-, Feder-Lager, aber auch mittels Einfaden-Lager (BESSEL's Fadenpendel).

Daß in der Technik heute die oberflächenbewegliche Lagertechnik allgemein dominiert, und daß diese insbesondere auch in der Meßtechnik den Ton angibt, ist wohlbekannt. Anderseits ist es aber auch nicht unbekannt, daß diese meistgebrauchte Lagertechnologie der Wahl gerade in der Anwendung auf hochgenaue Bewegungsmessungen mit sehr viel größeren Schwierigkeiten und Nachteilen zu kämpfen hat, als die allgemein schon bekannte elastische Lagertechnologie. Genau diese Nachteile sind es, die nicht zuletzt dazu geführt haben, daß das einstmals als unverzichtbar geltende Schwerependel aus der absoluten Schweremessung heute völlig verdrängt ist und ersetzt worden ist durch die Freifalltechnik (womit man technisch natürlich das andere Extrem wählt, weil man dabei auf bewegungsführende Lager überhaupt verzichtet).

Auf spezielle meßtechnische charakteristische Unterscheidungsmerkmale der erfindungsgemäßen Einarmigen Torsionswaage, beispielsweise gegen bekannte Horizontalpendel, sowohl was die Größenordnung als auch was die grundlegenden Unterschiede der Registrierung von mikroseismischer Bodenschwankung mit dem Horizontalpendel anstatt von systematischer stetiger Driftbewegung mit der Einarmigen Torsionswaage betrifft, ist im nachfolgenden am Beispiel der Beschreibung der Prototypen der Einarmigen Torsionswaage näher einzugehen.

Erfindungsgemäß erreicht wird dieser allgemeine Fortschritt im Vergleich des bekannten Standes der modernen Technik und Naturwissenschaft mittels jener gekennzeichneten besonderen technischen Merkmale, die vorstehend beschrieben worden sind, die durch die *Figur*en 1,2,3 und 8,9,10 erläutert und veranschaulicht, und die im Patentanspruch zusammengefaßt gekennzeichnet worden sind. Im Nachfolgenden werden diese charakteristischen Merkmale der Erfindung am Beispiel von speziellen Ausführungsformen sowie von technischen Ausführungsvarianten der Prototypen der Einarmigen Torsionswaage nun genauer gekennzeichnet und näher beschrieben.

**2.2 Bevorzugte Ausführungsformen des Elastischen Kraftlagers für Einarmige Torsionswaagen oder für Torsionsschwerependel**

Der in den *Figur*en 1,2,3 und 10 zu sehende starre Rahmen (3) des Elastischen Kraftlagers kann offenkundig sowohl parallel zur Horizontebene des Beobachters, also horizontal oder waagerecht orientiert sein, als auch vertikal zur Horizontebene des Beobachters, also lotrecht oder senkrecht aufgestellt sein. Er läßt sich aber natürlich auch in einem beliebigen Neigungswinkel zwischen eine zum Lot parallele senkrechte Richtung oder eine zum Horizont parallele waagerechte Richtung im Bezugs- und Laborsystem des Beobachters aufstellen. Dieses sind eigentlich technische Selbstverständlichkeiten, weil das an den beschriebenen technischen Merkmalen des Elastischen Kraftlagers nichts ändert, sondern lediglich die räumliche Orientierung eines von dessen Teilen-des Rahmens - gegen die Erdoberfläche als das Standard-Bezugssystem betrifft.

Darauf müßte also gar nicht besonders hingewiesen werden, wenn auf diese Weise nicht unterschiedliche technische Ausführungsformen herzustellen wären, womit das spezielle Zusammenspiel von Träger und Rahmen technisch bequem zu variieren und zweckmäßig anzupassen ist an spezielle meßtechnische Wünsche sowie an besondere physikalische Anforderungen: So wird eine senkrechte Aufstellung des Rahmens eine bevorzugte Aufstellung regelmäßig immer dann sein, wenn man den Träger mittels der Spannvorrichtung des Elastischen Kraftlagers in eine möglichst genau horizontale Ebene als eine physikalische ausgezeichnete und technische charakteristische Arbeitslage hochzuhebeln wünscht. Weil diese besondere Aufstellungsart und spezielle Ausführungsform des Elastischen Kraftlagers bezüglich der horizontalen Orientierung des Trägers dadurch ein physikalisches gemeinsames Merkmal mit einer Torsionswaage oder einem Torsionspendel oder einem Horizontalpendel von der allgemein bekannten Art bekommt, darum kann eine solche spezielle Ausführungsform mit einer solchen räumlichen Orientierung von äußerem Rahmen und von innerem Träger relativ zueinander physikalisch gekennzeichnet und technisch klassifiziert werden als: Einarmige Torsionswaage.

Analog verhält es sich mit der umgekehrten, horizontalen Aufstellungsart und speziellen Ausführungsform für eine dagegen rechtwinklige horizontale Orientierung des Rahmens des Kraftlagers: Da es hierbei physikalisch nicht möglich ist, den Träger mittels der Spannvorrichtung des Elastischen Kraftlagers vollständig hochhebeln bis in die horizontale Lage, sondern nur noch bis zu einem bestimmten gewünschten Neigungswinkel hochzuführen gegen diese, und in einer bestimmten Neigungsebene als dessen Arbeitsebene damit festhalten, darum hängt der Träger wegen des schweren Kolbens hierbei in ähnlicher Weise wie ein ganz gewöhnliches Schwerependel im Rahmen lotrecht. Weil er dabei, ähnlich wie ein Pendelkörper um sein Drehlager, um die Drehachse des Elastischen Kraftlagers in kleinen Amplituden um die lotrechte Vertikalebene hin- und herschwingt, darum kann man, im Unterschied somit zur vorigen Variante, diese besondere Aufstellungsweise und spezielle Ausführungsform mit horizontal aufgestelltem Rahmen eines Elastischen Kraftlagers rechtwinklig zur Lotrichtung physikalisch kennzeichnen und technisch klassifizieren als: Torsionsschwerependel.

Nun sind diese Dinge, im Unterschied und Gegensatz zur Kraftlagertechnologie selbst, welche die unverzichtbare technische Grundlage bildet für das Eine wie für das Andere, und die für beide Ausführungsarten unerläßlich ist, natürlich immer sehr relative Dinge: Der Anwender hat nämlich die Wahl, dazwischen hin- und herzuwechseln, oder sich auf eines festzulegen. Eben weil das Elastische Kraftlager diesen enormen technischen Vorzug der Wahl bietet, darum genügt es für die technische Charakteristik der Erfindung, sich auf eine dieser speziellen Herstellungsarten als Ausführungsbeispiel zu beschränken. Als diese bevorzugte Ausführungsart zur Beschreibung der Erfindung wird im Nachfolgenden jene genauer erläutert, die unter dem eben genannten speziellen Merkmal als eine Einarmige Torsionswaage technisch zu klassifizieren ist. Die bisherige Charakteristik als neutraler Generator bleibt davon unberührt bestehen, weil diese ganz von selbst damit nun stets mit eingeschlossen ist. Daher genügt es im Weiteren regelmäßig, sich für eine von diesen beiden Kennzeichnungen zu entscheiden, oder einfacherweise beide Bezeichnungen in einer Bedeutung wie Synonyme aufzufassen.

**2.2.1 Elastisches Kraftlager für Einarmige Torsionswaagen für vorzugsweisen horizontalen Arbeitsmodus und Transportmodus für Meßgeräte**

Figur 1 zeigt das Schema eines Zweiwellen-Torsionstriebwerks mit neutralem Kraftfeldantrieb - synonym: Einarmige Torsionswaage - , die mittels des Elastischen Kraftlagers parallel zur Horizontebene des Beobachters orientiert worden ist. Der Antrieb durch ein neutrales Kraftfeld -wie dem der Sonne - ist durch die Dreh- und Torsionsbewegungen des Kolbens zu registrieren und mittels der auf dem Träger mitgeführten Laserstrahler optisch direkt anzuzeigen. Dadurch zeigt sich, daß diese Bewegungen in Kurven zwischen Maxima und Minima von größter Auslenkung nach links und nach rechts in einem charakteristischen 6-Stunden-Rhythmus bzw. 12-Stunden-Rhythmus verlaufen.

**2.2.2 Elastisches Kraftlager für eine Einarmige Torsionswaage für vorzugsweise vertikalen Arbeitsmodus und Meßgeräte-Transportmodus**

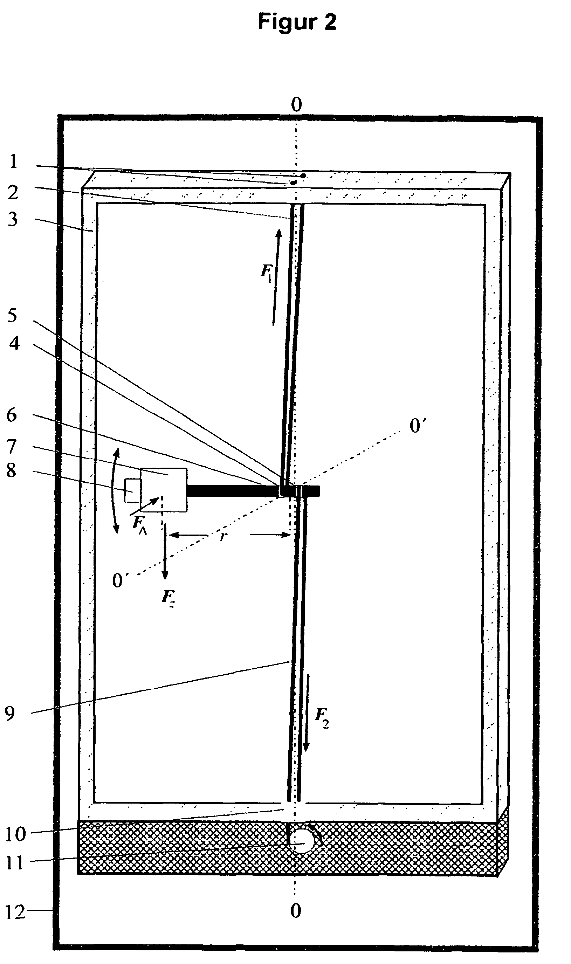

Figur 2 zeigt das Schema eines Vierwellen-Torsionstriebwerks mit neutralem Kraftfeldantrieb, oder synonym: Einarmige Torsionswaage. Diese ist mittels des Elastischen Kraftlagers ebenfalls parallel zur Horizontebene des Beobachters orientiert. Damit sind seitliche Torsions- und Drehbewegungen in der Horizontebene stärker zu unterdrücken, wodurch vertikale Vibrations- und Torsionsbewegungen besser zu isolieren sind und vertikale Kraftfeldkomponenten stärker hervorzubringen sind, statt wie horizontale Kraftfeldkomponenten mit einer Ausführungsform nach Figur 1. Die technische Ausführung dieses Elastischen Kraftlagers unterscheidet sich in charakteristischer Weise einfachstenfalls in der Anzahl bzw. in der Art der Torsionswellen: Gemäß Figur 2 sind oben und unten je zwei Wellen in der Art einer Flachwelle oder Parallelwelle, ähnlich wie in der Art eines geteilten Spannbandes, ausgeführt - im Gegensatz dazu sind es gemäß Figur 1 oben und unten je eine Welle in der Art eines einzigen Torsionsfadens. Die weiteren charakteristischen technischen Kennzeichen, wie Kraftlagerrahmen (3), Spannvorrichtung (11), Geräteträger (6), usw. sind weitgehend analog. Der damit erhaltene Unterschied der Wirkungsweise besteht im Wesentlichen darin, daß in der Ausführung als Vierwellentorsionstriebwerk die horizontale Bewegungsrichtung stärker unterdrückt ist durch das stärkere Quermoment infolge des Parallelabstandes der Doppelfasern, wodurch die vertikale Bewegungsrichtung ganz von selbst zur einer Vorzugsrichtung der Trägerbewegung wird. Diese zweite Ausführungsform ist dadurch als eine Vorzugslösung zur Beobachtung von veränderlichen Wirkungen der Erdschwerkraft, oder von vertikalen Neigungsbewegungen des Erdbodens, usw. zu erkennen; hingegen die erste Ausführungsform als eine Vorzugslösung zur Beobachtung von Wirkungen von neutralen Wechselwirkungen von träger Masse durch allgemeine Rotation und von schwerer Masse durch allgemeine Gravitation durch weitreichende neutrale Kraftfelder, wie beispielsweise dabei auch von veränderlichen Wirkungen der Sonnenanziehungskraft. Hierbei sind weitere naheliegende technische charakteristische Merkmale zu sehen: Eine räumliche Nebenordnung beider technischer Ausführungsformen verschafft den Vorteil der meßtechnischen Trennung und Auflösung derartiger unabhängiger Wirkungen, weil damit unabhängige Variationen von Kraftfeldstärken in horizontaler Richtung oder in vertikaler Richtung am selben Ort zur gleichen Zeit zu registrieren sind. Die Figuren 1,2,3 sowie 10 lassen dabei als weiteres wesentliches charakteristisches technisches Merkmal der Erfindung erkennen, daß damit in beliebigen technischen Ausführungsformen eine Beschwerung des beweglichen inneren starren Trägers (6) mit meßtechnischen Nutzlasten - wie Kolben (7), wie Laserstrahler (8), usw. - von einer sehr kleinen bis zu einer praktisch unbegrenzten Beladung mit beliebiger Art von Meßtechnik technisch möglich ist.

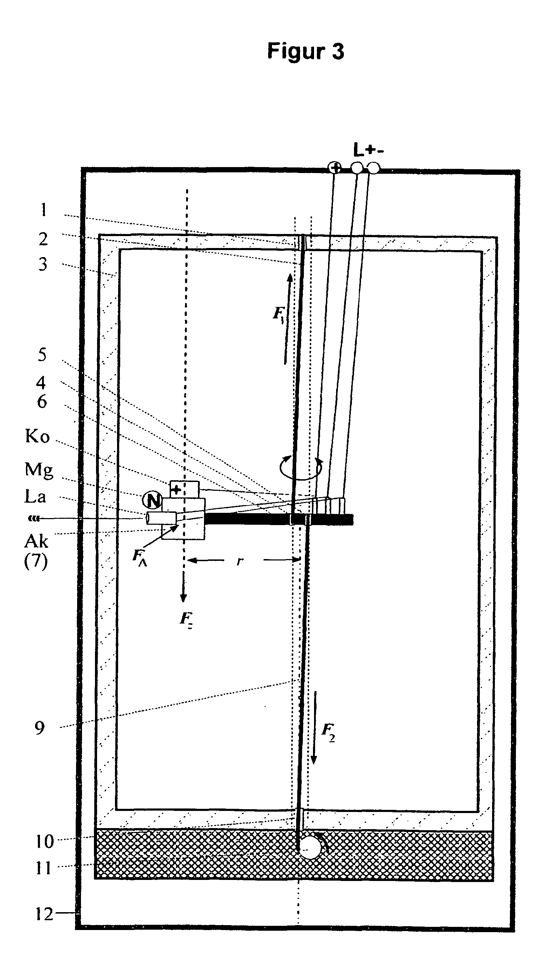

Darin zeigt sich ein weiteres charakteristisches technisches Merkmal der Erfindung hinsichtlich deren technischer Verwendung als ein - wie Name schon sagt - Elastisches Kraftlager. Vorgenannte beide Ausführungsformen bieten zwei Beispiele dafür, daß eine Einarmige Torsionswaage in dieser Weise das technische Merkmal einer "Transportmaschine" für beliebige Bewegungs-Meßgeräte in einen dauerhaften stabilen Zustand von ungestörter freier Schwebung im Erdschwerefeld relativ zum Erdboden besitzt, was speziell für eine sichere Messung von Relativbewegungen der Erdoberfläche wichtig ist. Die enormen meßtechnischen Vorteile, die aus diesem technischen Merkmal fließen, zeigen sich durch nachfolgende Beispiele der Erprobung Einarmiger Torsionswaagen noch genauer. Die wichtigste Nutzung bei den Ausführungsbeipielen besteht, wie durch die Figuren 1, 2 gezeigt, hier im Speziellen darin, daß einige dieser Nutzlasten dabei als Laserstrahler ausgebildet worden sind: Dieses sind somit direkt auf den Träger montierte Richtungsstrahler als Meßgeräte für Bewegungsgrößen und für Winkelgrößen, die kohärente Lichtstrahlen parallel zur Trägerachse (Figur 3) für eine hochgenaue Echtzeitbeobachtung der verschiedenen Bewegungen des Trägers aussenden.

Daß diese erfindungsgemäße technische Lösung eine völlig neue Registrierungstechnologie bedeutet im Vergleich einer herkömmlichen Registrierungstechnologie mittels bekannter Lagertechnik, womit die Strahlungsquelle selbst in einer mehr oder weniger starren Verbindung mit dem Erdboden in in einer "Position der Ruhe" zu erhalten versucht wird, ist offenkundig, weil das unmöglich ist, da der Erdboden selbst nämlich weder ideal ruht, noch ideal starr ist, sondern sich stets in unbestimmter Weise hierhin oder dorthin "mikroseismisch" bewegt; dieses ist heute auch allgemein bekannt. Daß es daher zur generellen Erhöhung von Sicherheit und Genauigkeit von Messungen von Relativ-Bewegungen der Erdoberfläche beiträgt, das erfindungsgemäß keine mit der Erde "ruhenden" Richtungsstrahler verwendet werden, sondern mit dem Träger sich mit bewegende Richtungsstrahler, liegt dabei klar auf der Hand. Das auf diese Weise mittels eines Elastischen Kraftlagers technisch realisierte Abheben eines Richtstrahlers vom Erdboden, und die damit technisch verwirklichte horizontale Bewegung in einem Schwebezustand wie in einem Dauer-Zustand von praktischer Gewichtslosigkeit oder von Quasi-Schwerelosigkeit, hält solche Mikrostörungen in wirksamer Weise von den Meßinstrumenten fern. Das bedeutet einen klaren Vorteil gegen das herkömmliche technische Verfahren der Rückspiegelung von Licht von Richtungsstrahlern, die sich nicht mit bewegen, sondern die außerhalb "ruhen", indem deren Strahlen mithilfe von mit bewegtem Galvanometer spiegel, Drehspiegel, usw., umgelenkt werden, als ein technisches kennzeichnendes Merkmal der herkömmlichen Torsionswaagen und Torsionspendel; das zeigen die Figuren 6,7. Daß auf diese bekannte Weise nur ein kleinerer Effekt an physikalischer Isolierung und Trennung von unabhängigen Relativbewegungen des Meßinstrumentes und des Erdbodens technisch zu erreichen ist, was aber eine Voraussetzung bildet für sicheres wiederholbares Messen im Bereich höchster Genauigkeiten, das muß man dabei nicht besonders hervorheben. Auch dieses technische Merkmal der Erfindung trägt dazu bei, daß sich damit eine Vielfalt von neuen technischen Wegen speziell für sichereres Messen von Relativbewegungen der Oberfläche der Erde ergibt: Von extrem kleinen Bodenwellen über extrem langsame Driftbewegungen des Erdbodens bis hin zu den extrem starken Erdbebenwellen.

Das Elastische Kraftlager bietet dabei sogar eine besonders bequeme technische Möglichkeit zur Realisierung dieser Trennung, welche sowohl in dieser Größenordnung als auch in dieser Art technisch nicht zu schaffen ist mithilfe von herkömmlicher Technologie der Drehwaage, des Torsionspendels, des Horizontalpendels, oder des Vertikalpendels, um sich von solchen störenden Nano-Bewegungen des Erdbodens frei zu machen, und um sich damit physikalisch künstlich neue sichere Beobachtersysteme zu verschaffen sowie praktisch ungestörte Bezugspunkte für die Messungen von Relativbewegungen gegen den Erdboden zu verschaffen. Indem man das Elastische Kraftlager dafür verwendet, wird man für hochgenaue Richtungs- und Bewegungsmessungen von den keineswegs "ruhenden" erdbodenfesten Bezugspunkten frei, und zwar so, daß dennoch die dafür technisch zwingend erforderliche sichere feste Verbindung mit dem Erdboden über den Rahmen (3) des Kraftlagers bestehen bleibt.

Die Nutzung dieses technischen Vorzuges gehört darum in alle hier gekennzeichneten meßtechnischen Verwendungen immer mit dazu, weil dieser damit immer ganz von allein durch beliebige Bewegungsmeßgeräte zur Wirkung kommt - wie Laserstrahler, usw. - , die auf den Geräteträger der neutralen Kraftfeldmaschine montiert werden. Daß sich damit inbesondere Vorteile speziell auch für den hochaktuellen Bereich der Registrierung von kleinsten Effekten in der Nanodimension von Relativ-Bewegungen von großer träger Masse und von großer schwerer Masse zueinander ergeben, was in einem einheitlichen neutralen Kraftfeld eines sowohl rotierenden als auch gravitierenden Erdkörpers von physikalischer prinzipieller Bedeutung ist, das ist in diesem Zusammenhang klar zu erkennen. Genau das aber ist mittels bekannter Registrierungstechnologie mit den dabei bekannten hochempfindlichen Meßgeräten, wie Drehwaage, Torsionspendel, Horizontalpendel, oder Schwerependel technisch so gar nicht zu schaffen, und damit physikalisch regelmäßig überhaupt nicht zu erfassen. Das breite Einsatzgebiet des Elastischen Kraftlagers ist dadurch schon deutlich zu erkennen, ebenso wie der Umstand, daß gerade auch dieses technische Merkmal wesentlich beiträgt zur enormen Verbesserung der Meßgenauigkeit kleinster Größen von langsamsten Bewegungen mit Einarmigen Torsionswaagen im Vergleich bekannter Geräte um bis zu einige Größenordnungen, was durch die nachgenannten charakteristischen technischen Daten der technischen Erprobungen der ersten Einarmigen Torsionswaagen zu zeigen ist.

**2.2.3 Elastisches Kraftlager für eine Einarmige Torsionswaage mit Mehrfach-Kraftfeldantrieb für getrennte Wirkungskanäle der Wechselwirkungskräfte und der Reaktionskräfte**

Die Figur 3 zeigt das Schema einer Einarmigen Torsionswaage mit zwei Torsionswellen mit einem kombinierten mehrfachen Krahfeldantrieb durch unabhängige Kraftfelder, die durch unabhängige Reichweiten, entweder weite Reichweite oder kurze Reichweite, und durch unabhängige Arten der Wirkung und Wechselwirkung gekennzeichnet sind, entweder durch physikalisch unmöglich abzuschirmende durchdringende (neutrale) Wirkung und Wechselwirkung oder durch abzuschirmende nicht-durchdringende (elektrische, magnetische,...) Wirkung und Wechselwirkung. Im Unterschied zu den vorgenannten Ausführungsformen für einen ausschließlichen neutralen Massenkraftantrieb des Trägersystems durch weitreichende Kraftfelder - mechanische Kräfte wirken, wenn man von Luftströmung usw. absieht (Vakuummodus), nicht direkt auf diesen, sondern auf den Lagerrahmen - ist das Trägersystem hierfür mit weiteren Kraftfeldantrieben durch magnetische und /oder elektrische Kraftfelder technisch kombiniert worden: Der magnetische Kraftfeldantrieb beispielsweise ist mittels eines Dauermagneten (Mg) als eine mitbewegte magnetische Nutzlast und der elektrische Kraftfeldantrieb mittels eines Kondensators (Ko) als eine mitbewegte elektrische Nutzlast technisch dadurch herzustellen, daß der Magnet und/oder der Kondensator auf dem Träger montiert ist. Das Anbringen eines kraftfeldaufbauenden magnetischen und/oder elektrischen Gegenpoles geschieht analog in bekannter Weise, beispielsweise durch Einbau eines weiteren Magneten in den Kraftlagerrahmen (3), eines weiteren Kondensators in das Schutzgehäuse (12), oder Anordnung an irgendeiner anderen passenden Stelle.

Figur 3 verdeutlicht dabei auch die Hauptwege der Wirkung: Neutrale Kräfte versetzen den Träger (6) vermittels der neutralen Masse seines Antriebskolbens (Ak) in Bewegung, die neutrale Wechselwirkung erfolgt hierbei durch neutrale Kraftfelder, die direkt auf die neutrale Masse selbst wirken: Die Wirkung der neutralen Wechselwirkung ist durch die Bewegung des Trägers zu registrieren, welche der mitbewegte Laser-Richtstrahler (La) sichtbar macht. Wovon diese genau abhängt, ob von einer Änderung von neutraler Feldstärke oder von einer Richtungsänderung des Trägers zu einer bestimmten neutralen Kraftquelle, usw., das bleibt dabei zunächst noch unbestimmt.

Hiervon unabhängig besteht noch ein zweiter Kräftekanal; der allerdings wohlbekannt ist, und der darum beim erfindungsgemäßen Kraftantrieb nicht im Vordergrund steht. Denn dieser ist nicht durch neutrale Wechselwirkungskräfte physikalisch ausgezeichnet, sondern durch gewöhnliche mechanische Reaktionskräfte; er ist infolgedessen auch in ganz anderer Weise als ein mechanischer Kräftekanal technisch gekennzeichnet, der dem Weg der Festigkeitskräfte und der Spannungskräfte folgt, und darum in den geometrischen Konturen des Kraftlagerrahmens und der Torsionskörper verläuft, nicht jedoch im Bereich der neutralen Wechselwirkungskräfte von neutraler Masse und neutralem Feld. Über diesen zweiten Kanal kommen mechanische Kräfte in bekannter Weise zur Wirkung, beispielsweise im Zusammenhang von Erdbodenbewegungen über den Kraftlagerrahmen durch mechanische Ausweichbewegung des Trägers. Diese zur Wirkung zu bringen, darauf kommt es gemäß der erfindungsgemäßen Aufgabenstellung technisch natürlich nicht an. Daß aber mechanische Wirkungen dadurch technisch automatisch mitregistriert werden, das ist dabei natürlich kein Nachteil, sondern ein weiterer großer Vorteil. Dabei ist aber auch deutlich zu erkennen, daß mit einer Einarmigen Torsionswaage, im wesentlichen Unterschied beispielsweise zu einem durch reine mechanische Wirkung funktionierenden Trägheitspendel, etwa von der Art eines Horizontalseismometers, zwischen physikalisch prinzipiell ungleichen und technisch grundlegend verschiedenen Kanälen physikalisch streng zu unterscheiden und technisch scharf zu trennen ist, nämlich zwischen einerseits einer aktiven neutralen Wechselwirkung, und anderseits einer passiven mechanischen Gegenwirkung oder Reaktionswirkung.

In der Praxis kommt natürlich immer beides zusammen: Und an genau diesem Punkt setzt diese dritte Ausführungsform der Erfindung durch das dabei hinzugefügte technische Merkmal zusätzlicher Feldkraftantriebe ein. Denn daß sich eine unaufhörliche physikalische und automatische technische Erhaltung einer stetigen kontinuierlichen Bewegung eines frei schwebenden Trägers - und genau das ist ein physikalisches ausgezeichnetes Erkennungsmerkmal einer Einarmigen Torsionswaage - sich physikalisch prinzipiell nicht allein und nicht ausschließlich durch mechanische Reaktionskräfte erhält, und zwar in dem dabei wohlbekannten Sinne einer reinen Gegenwirkung von "beharrender" Masse gegen eine "äußere" Änderung ihres Beharrungszustandes, sondern physikalisch prinzipiell nur durch neutrale Wechselwirkungskräfte, weil nämlich diese sich im Unterschied zu mechanischen Kräften durch allgemeine Rotation und allgemeine Gravitation physikalisch allgemeingültig stabil erhalten, und dadurch physikalisch universell wirken, und weil nur diese durch kein bekanntes Mittel abzuschirmen sind, und darum bis in kleinste Raumzeitbereiche stetig durchdringen, und dort stetig und kontinuierlich mit neutraler Materie von beliebiger Masse aktiv wechselwirken. Darum entstand, sofort mit Entwicklung der Einarmigen Torsionswaage, die weitere neue technische Aufgabe, eine technische Vorrichtung herzustellen, womit Bewegungen des Trägers über getrennte Kanäle der Wechselwirkungen physikalisch künstlich zu erregen sind, so, daß damit in einer steuerbaren eindeutig definierten Weise wechselsweise einzuwirken ist, entweder unabhängig von dem nicht abzuschirmenden Kanal oder unabhängig von dem mechanischen Kanal. Erfindungsgemäß sind hierfür unabhängige Kraftfelder durch das nahe Umfeld des Trägers direkt auf diesen durch geeignete technische Mittel zu übertragen: Eine Variante von der technischen Lösung dieser technischen Aufgabe zeigt Figur 3 als eine weitere Ausbildungsform einer Einarmigen Torsionswaage: Zu diesem Zweck wurden zwei unabhängige Kraftfeldantriebe des Trägers technisch hergestellt, und zwar mithilfe eines Magnetkraftfeldes mittels mitbewegtem magnetischen Stoff eines Permanent-Magneten (Mg) und mittels eines elektrostatischen Kraftfeldes mittels mitbewegter elektrischer Ladung eines Kondensators (Ko).

Dabei ist ein weiteres technisches allgemeines charakteristisches Merkmal deutlich zu erkennen, das die elektrische Verkabelung betrifft. Gemäß Figuren 1 und 2 geht nämlich der elektrische Strom für die elektronische und elektrooptische Ausrüstung - sowie gemäß Figur 3 für die elektronische, elektrooptische, und elektrische Ausrüstung - über stromführende Kabeldrähte zum Träger. Dieser Kabelbaum ist hier regelmäßig ein Bestandteil des Elastischen Kraftlagers, weil auch dieser eine Torsionswelle bildet - aber natürlich kein Spannband. Die Bezeichnung Mehrwellen-Torsionsgetriebe bringt auch dieses spezielle Merkmal schon mit zum Ausdruck. Bei den Prototypen ist dieser Teil des Torsionsgetriebes aus dünnen Kupferdrähten gefertigt: Er verbindet die mit "L+-" gekennzeichneten Anschlußkontakte am oberen Rahmenlager mit den mittleren Anschlußkontakten auf dem Träger.

Da herkömmliche hochempfindliche Torsionswaagen und Horizontalpendel ohne den erfindungsgemäßen Kraftfeldantrieb nach einem ganz anderen Wirkungsprinzip als rein mechanische Trägheitspendel nach dem Reaktionsprinzip arbeiten, darum ist diese technische Lösung dort so natürlich nicht zu verwenden. Denn infolge des fehlenden Kraftfeldantriebes hemmen die Kräfte zur Verbiegung und Verdrillung der Leitungsdrähte die Drehbewegung dabei erheblich, wodurch sie ein beachtliches Störmoment des Direktionsmomentes bilden. Darum gibt es gerade bei den genauesten Drehwaagen und hochempfindlichsten Drehpendeln keine technische Alternative zum Drehspiegel als Mittel der Wahl zur Registrierung von Drehbewegungen, weil damit die physikalische Grundlage für eine ungestörte Transportbewegung von Richtungsstrahlern, usw. technisch nicht zu schaffen ist. Darin zeigt sich somit ein weiterer Vorteil des Elastischen Kraft-Lagers, der jedoch schon mehr aus der Gesamtheit seiner wesentlich anderen charakteristischen technischen Merkmale resultiert, deren wichtigste im Patentanspruch zusammenfassend gekennzeichnet worden sind.

Wie der zweite Kanal über Wechselwirkungskräfte anstatt über Reaktionskräfte technisch zu steuern ist, das ist am Beispiel dieser speziellen Ausführungsform einer Einarmigen Torsionswaage zu erkennen: Beispielsweise mittels bekannter Schattvorrichtung für periodisches Zu- oder Abschalten der elektrischen Spannung; mittels bekannter Regelvorrichtung für kontinuierliche Variation der elektrischen Stromstärke, usw. Hierdurch ist mit dieser dritten Ausführungsform der Einarmigen Torsionswaage eine besonders große Vielfalt von unterschiedlichsten Wirkungen für genauere Untersuchungen von Wirkungen von unabhängigen Arten von Wechselwirkungen darzustellen und zu registrieren.

**2.2.4 Technische Merkmale ausgewählter Funktionselemente eines Elastischen Kraftlagers für Einarmige Torsionswaagen oder Torsionsschwerependel**

1. Der Kraftlagerrahmen (3) besteht gemäß Figuren 1,2,3, und 10 regelmäßig aus verwindungssteifen Metallprofilen aus vorzugsweise zug- und druckfestem nichtmagnetischem Material. Beispielsweise ist der Rahmen des Kraftlagers der Prototypen der Einarmigen Torsionswaage aufgebaut aus Aluminiumprofilen.

2. Die elastischen Torsionswellen gemäß Figuren 1,2,3, und 10 bestehen erfindungsgemäß im Unterschied und Gegensatz zu bekannten elastischen Torsionsaufhängungen für Horizontalpendel oder Drehwaagen regelmäßig nicht aus Metallgefüge und nicht aus dabei bevorzugtem Material wie Wolfram oder Platin, sondern regelmäßig aus synthetischen Fasern von hoher Zugfestigkeit und von leichter Biegsamkeit, beispielsweise aus einem Fasergeflecht wie Dyneema aus einem hochreißfesten Fasermaterial wie Kevlac Zur Steuerung des damit erhaltenen charakteristischen technischen Merkmals einer unter Belastung beständigen Dehnung und Verlängerung der Länge des Wellenkörpers besitzt das Elastische Kraftlager eine Spannvorrichtung (11) zur wahlweisen Verkürzung oder Verlängerung der Länge der Torsionswellen. Diese Vorrichtung gehört zu den wichtigsten technischen Besonderheiten eines Elastischen Kraftlagers, weil sie bei bekannter Technik und Technologie der elastischen Lagerung, wie beispielsweise bei der Spannband-Lagerung der Horizontalpendel oder der Torsions-Lagerung der Torsionspendel charakteristischerweise fehlt. Die Spannvorrichtung (11) der Torsionswellen bildet hierdurch ein charakteristisches Unterscheidungsmerkmal und technisches Erkennungsmerkmal eines Elastischen Kraftlagers.

3. Die obere Zug- und Torsionswelle (2) hat die technische Hauptfunktion, das Gewicht des Geräteträgers zu "tragen", und ist darum technisch zu kennzeichnen als Tragfaser. Im Unterschied dazu hat die untere Zug- und Torsionswelle (9) die andere technische Hauptfunktion, den Geräteträger (6) mittels der Spannvorrichtung (11) "hochzuhebeln" bis zur gewünschten Arbeitsebene und Drehungsebene um die Torsionswellen, und ihn darin dann festzuhalten. Diese untere Faser ist daher als Hebelfaser zu kennzeichnen.

4. Die Tragfaser und die Hebelfaser sind an den Enden in Wellenlagern geführt, deren Anordnung als Funktionselemente (1,10) des Rahmens sowie als Funktionselemente (4,5) des Trägers aus den Figuren 1,2,3 und 10 hervorgeht. Diese sind zur Vermeidung von Gleitreibungskräften als Lagerstörkräfte regelmäßig nicht als oberflächenbewegliche Wälzlager, Kugellager, usw., sondern als unbewegliche Formschlußlager hergestellt, z.B. ausgeführt als Bohrung mit etwas größeren Durchmesser als die Faser und mit speziellem Faserpaßsitz versehen, um eine Gleitung der Sitzflächen beim Verdrillen der Fasern auszuschließen.

5. Der Geräteträger (6) weist als ein charakteristisches technisches Funktionselement (7) einen übergewichtigen und asymmetrischen neutralen Funktionskörper auf. Im horizontalen Arbeitsmodus bildet der Geräteträger mit seiner gesamten Ausrüstung die Einarmige Torsionswaage im engeren Sinne, und dann hat dieser Funktionskörper (7) die technische Funktion eines Antriebskolbens der Erhaltung der Trägerbewegung durch neutrale Feldkräfte. Im vertikalen Arbeitsmodus bildet analog der Geräteträger die Pendelstange und der Funktionskörper (7) das Pendelgewicht und die gesamte Funktionseinheit das Torsionsschwerependel im engeren Sinne. Der Geräteträger ist entsprechend dieser Aufgaben vorzugsweise aus zug-, druck-, und biegefestem Leichtmetall-Profil gefertigt; beispielsweise die Geräteträger der ersten Prototypen der Einarmigen Torsionswaage aus einem H-förmigen Trägerprofil aus Hartaluminium.

6. Der neutrale Triebwerkskörper (7) ist zur Erzielung eines möglichst hohen Wirkungsgrades der Wirkung der neutralen Wechselwirkung von neutralen Feldkräften mit hauptsächlich dessen neutraler Masse regelmäßig aus Material von großer Massendichte hergestellt, vorzugsweise aus Schwermetall. Dieser Funktionskörper ist deshalb bei den Prototypen der Einarmigen Torsionswaage technisch ausgebildet als Bleikörper. Eine weitere technische Aufgabe dieses Funktionskörpers besteht darin, ein Beschwerungskörper zu sein, welcher die Gewichtskraft zur Verfügung stellt, deren Kraftverstärkung zur Stabilhaltung der Torsionswellen ein kennzeichnendes technisches Merkmal des Elastischen Kraftlagers ist; darin besteht eine zweite wichtige technische Funktion dieses Funktionskörpers. Die Kraftverstärkung der Gewichtskraft ist dabei physikalisch vermittels eines Hebelarmes im Geräteträger zu erhalten, der mittels der darin angebrachten Wellenlager (4,5), und zwar mithilfe deren Abstandes "$a$", technisch hergestellt ist. Im Resultat stehen Tragfaser und Hebelfaser unter dauerhafter extrem starker faserparalleler Führungskraft und extrem hoher innerer Zugspannung. Auf diese Art und Weise ist erfindungsgemäß ein weiteres besonderes technisches Kennzeichen des Elastischen Kraftlagers technisch hergestellt, nämlich eine Kombination von einer extrem sicheren elastischen Präzisionsführung und von einem extrem empfindlichen elastischen Getriebe. Diese charakteristische Kombination dieser technischen Merkmale bestimmt in hohem Grad die technischen Besonderheiten und die besonderen Vorteile, die das Elastische Kraftlager gerade für meßtechnische Anwendungen als ein Mittel der Wahl technisch kennzeichnen und technisch charakterisieren, wie:

- extreme hohe Stabilität der Führung der Bewegung des Trägers,

- extreme hohe Sicherheit der Wiederholung einer Trägerbewegung,

- extrem hohe Empfindlichkeit der Registrierung kleinster Wirkungen von neutralen Wechselwirkungen mit neutraler Masse des Trägers durch Registrierung der Änderungen der Bewegungen des Trägers; und anderes mehr.

7. Die Spannvorrichtung (11) wirkt direkt auf die Hebelfaser und ist vorzugsweise im unteren Teil des Kraftlagerrahmens angeordnet, wie dies die Figuren 1,2,3,10 zeigen. Sie ist in an sich bekannter Weise hergestellt, beispielsweise mittels einer Umlenkrolle, die als Antriebswalze der Hebelfaser ausgeführt ist. Die technische Funktionsweise ist klar erkennbar: Drehen in Spannrichtung verkürzt die Länge der Hebelfaser um das auf die Walze aufgewickelte Stück, dadurch erhöht sich der Druck auf das hintere Führungslager (5) des Geräteträgers, wodurch der vordere Teil mit dem Funktionskörper (7) durch die Hebelwirkung des steifen Trägerprofils höhergehoben wird. Wenn der Beschwerungskörper (7) also vorher unterhalb der Horizontebene positioniert war, dann nimmt gleichzeitig damit auch die zur Faser parallel gerichtete untere Führungskraft $F_2$ in der Hebelfaser zu, weil in diesem Falle auch der Schwerpunktabstand "$b$" des Mittelpunktes der Wirkung der Gewichtskraft von der Mitte des Traglagers (4) zunimmt, womit sich der Kraftarm der Gewichtskraft vergrößert. Damit ist also sowohl die Größe der starken Zugkraft in der Längsrichtung der Faser - im Gegensatz zur schwachen Rückstellkraft $F_{2\omega}$ des Rückstellmomentes in der Querrichtung der Faser parallel zur Umlaufbewegung des Kolbens um die Hauptdrehachse "0" des Kraftlagers - zu steuern, als auch die genaue Arbeitshöhe des Funktionskörpers (7), ebenso die Größe der starken Längskraft $F_1$ in der oberen Torsionswelle und Tragfaser. Die Spannvorrichtung (11) ist somit das erfindungsgemäße technische Mittel, womit Mehrfaches zu erreichen ist: Damit sind die Kräfte einzustellen und zu steuern, womit das Elastische Kraftlager selbst zu stabilisieren ist mittels der faser parallelen Führungskräfte in Hebelfaser und Tragfaser. Damit ist die Geometrie der Bahnführung des Funktionskörpers (7) hinsichtlich dessen Höhe über Grund bzw. über Aufstellbasis sowie hinsichtlich dessen Abstand von der Hauptdrehachse einzustellen und zu steuern, das heißt, damit ist der Arbeitsmodus der Einarmigen Torsionswaage oder des Torsionsschwerependels den jeweiligen besonderen Bedingungen, Anforderungen, oder Wünschen anzupassen, wie sie im Meßbetrieb in vielfältiger Weise auftreten und wie der Anwender es dabei braucht. Dagegen wird durch Drehen der Spannvorrichtung in die Gegenrichtung die Hebelfaser um das abgerollte Stück verlängert: Sofern der Massekolben (7) also vorher unterhalb der Horizontale schwebte, senkt er sich also hierdurch noch tiefer, und damit wird der Abstand des Massenschwerpunktes der Einarmigen Torsionswaage von der Kraftlagerhauptachse "0" kleiner, und somit wird auch der Faktor der Kraftverstärkung kleiner. Umgekehrt verhält es sich aber natürlich dann, wenn der Massekolben (7) vorher auf einen Arbeitsmodus oberhalb der Horizontale eingestellt war. Dadurch ist zu erkennen, daß das als Spannvorrichtung gekennzeichnete Funktionselement genaugenommen (11) ein technisches Multifunktionselement ist, und in dieser Eigenschaft ein charakteristisches Merkmal eines Elastischen Kraftlagers bildet, wodurch dieses von bekannter Lagertechnik technisch abzugrenzen und zu unterscheiden ist: Dieses Funktionselement (11) ist Spannvorrichtung für die Spannkörper, womit die Torsionskörper technisch hergestellt sind; dieses Funktionselement (11) ist Einstell- und Steuervorrichtung für die Arbeitshöhe des Gewichtskörpers (7) in dem durch Gravitationsanziehung stark wirkenden Erdschwerefeld; und dieses Funktionselement (11) ist Einstell- und Steuervorrichtung für den Drehradius des Triebwerkskolbens (7) um die Kraftlagerachse des Kraftlagers im allgemeinen Kraftfeld der universellen neutralen Wechselwirkung.

8. Die Kraftverstärkung erhält das Elastische Kraftlager stabil. Die Kraftverstärkung wird dabei erreicht vermittels der Kraft $F_z$ des Übergewichtes der Gewichtskraft der Gewichtsmasse des Trägers, des Kolbens, der Meßgeräte, usw., mittels des Hebelarmes "$a$" zwischen den Zentren der Trägerlager (4, 5) von Tragfaser und Hebelfaser auf dem Geräteträger. Damit ist konstruktiv die genaue Größe der Kraftverstärkung, beziehungsweise der Faktor der Kraftverstärkung, einzustellen und technisch festzulegen, weil dieser bestimmt ist von der Länge "a" dieses Abstandes des Kraftarmes des Übergewichtes der Einarmigen Torsionswaage, womit jenes vermittels dieser beiden Lager an den Enden der Torsionswellen angreift, und diese dadurch in ihrer Längsrichtung strafft. Der andere Teil des Kraftarmes von der Länge "$b$" wird technisch mittels des Abstandes des Schwerpunktes des Übergewichtes der Einarmigen Torsionswaage - also vor allem mithilfe des Beschwerungskörpers (7) - gegen die Mitte des Tragfaserlagers hergestellt. Je größer die Asymmetrie der Masseverteilung bezüglich der Hauptdrehachse (0) mittels des Abstandes des Massekolbens (7) vom Tragfaserlager gemacht wird, desto größer wird auch die Übergewichtskraft, und damit die Kraft, die zur Kraftverstärkung zur Verfügung steht. Es ist evident, daß es dabei eine technische Grenze für die Kraftverstärkung und für den Stabilisierungseffekt gibt, nämlich die, die durch die Materialfestigkeit, insbesondere durch die Zerreißspannung der elastischen Fasern, gezogen ist. Davon hängt es wesentlich ab, wie klein minimal der Hebelarm des Trägers, und somit der Dreharm der trägen Masse von Funktionskörper und Träger, bzw. der Einarmigen Torsionswaage, bezüglich deren Hauptträgheitsachse um die Kraftlagerhauptachse 0 (Figur 1) für neutrale Kräfte zu machen ist, sowie wie groß maximal der Hebelarm der schweren Masse der Einarmigen Torsionswaage für Gewichtskraft und Anziehungskraft zum Erdkörper zu machen ist, und nicht zuletzt, wie groß der Bahnradius der Bewegung des Massenpunktes von schwerer Masse statt von träger Masse der Einarmigen Torsionswaage (Figur 2) um die rechtwinklig zur Kraftlagerhauptachse "0" liegende unabhängige Drehachse "0'" zu machen ist: Dieses sind, genau genommen, aber selbstverständlich schon wieder technische Merkmale bei der Wirkungsweise der Einarmigen Torsionswaage - aber nicht des Elastischen Kraftlagers selbst, womit die Einarmige Torsionswaage technisch hergestellt ist.

Dieses Beispiel zeigt, beides bildet eine technische Einheit, wobei aber scharf zu trennen ist zwischen erfindungsgemäßem Mittel der technischen Herstellung, und erfindungsgemäß damit technisch Hergestelltem, als technisch grundverschiedene Dinge, weil unabhängige erfindungsgemäße technische Lösungen und Technologien in dieser Einheit: Denn mittels eines Elastischen Kraftlagers sind über den bekannten Stand der Technik hinaus weitere technische neue Produkte in vielfältiger Weise technisch herzustellen. Wie Einarmige Torsionswaage, wie Torsionsschwerependel, usw.. Dadurch ist schon zu erkennen, daß das Elastische Kraftlager ein technisches charakteristisches Merkmal einer Basistechnologie oder Schlüsseltechnologie besitzt. Das bedeutet im Hinblick des Patentanspruches, die Merkmale des Elastischen Kraftlagers sind in den Mittelpunkt des Patentanspruches zu stellen.

Anderseits ist aber auch klar, daß durch Beschränkung auf dieses zentrale Teil kein Verständnis des Wesens der Erfindung zu erreichen ist, denn dafür ist beispielhaft auch zu zeigen, was technisch genau damit zu machen, und was physikalisch sicher damit zu erreichen ist. Dafür sind Beispiele nicht nur dieser Lagertechnik selbst, sondern damit hergestellter Technik zu geben: Diese Beispiele sind die damit hergestellten Einarmigen Torsionswaagen sowie deren technische Erprobungen. Denn damit werden technische Daten und technische Merkmale bekannt, die nicht nur qualitative technische wesentliche Merkmale offenbaren, sondern die auch eine technische genauere quantitative Charakteristik geben, also bezüglich Wirkungsgrad, Kraftverstärkungsfaktor, usw.. Dafür ist es aber zu beachten, daß diese Charakteristik hier natürlich unter Beschränkung auf genau diese Zielstellung erfolgt, also nachfolgend erstens sehr vereinfacht und zweitens grundsätzlich beschränkt auf genau das geschieht, was dabei an technischen kennzeichnenden Merkmalen durch die technischen Erprobungsergebnisse konkret zu fassen ist. Um die Forderung nach Vereinfachung und Sicherheit der Kennzeichnung durch zahlenmäßige technische kennzeichnende Merkmale - wie Faktor der Kraftverstärkung; Richtung der Kraftlagerhauptachse; etc. - zu erfüllen, wird nachfolgend auf das bekannte Verfahren der Beschreibung durch Mittelwerte zurückgegriffen, das heißt, Angaben zum Abstand von Stellen oder zur Wirkung sind regelmäßig Angaben über mittlere Wirkung von Masse oder Kraft bezüglich in der allgemein üblichen Weise bestimmter "Schwerpunkte" oder "Massenpunkte" oder "Fluchtpunkte"; die charakteristischen Erfahrungsgrößen bei den Erprobungsergebnissen sind dadurch "Bewegungsgrößen" von so definierten "Wirkungsstellen", sowie Richtungen und Abstände bezüglich von so definierten "Bezugspunkten". Durch diese dem heutigen Stand geschuldete Beschreibung verzichtet man natürlich auf genau das, was erfindungsgemäß wesentlich im Zentrum dieser Technik und Technologie steht, nämlich, technisches Mittel zu sein für die technische Nutzung von physikalischen Wirkungen von neutralen Wechselwirkungen. Das bedeutet ein prinzipielles Zurückgehen hinter das vorstehend schon Dargelegte zum Wirkungsprinzip, und einen Nachteil erster Ordnung, was hierbei aber zunächst hinzunehmen ist, denn dafür ist eine bessere wissenschaftliche Grundlage als die der Mechanik gegenwärtig nicht allgemein bekannt; - diese aber kommt mit solchen Bestimmungen regelmäßig aus für eine quantitative hinreichend genaue Kennzeichnung technischer Merkmale.

Unter Berücksichtigung der damit verbundenen grundsätzlichen Überlegungen und Einschränkungen ist das technische Merkmal der Kraftverstärkung des Elastischen Kraftlagers genauer zu charakterisieren: Für maximale Kraftverstärkung und höchste Stabilität des Elastischen Kraftlagers verläuft erfindungsgemäß die Fluchtlinie der Kaftlagerhauptachse genau im Lot durch die Mitte des Rahmenlagers der Tragfaser und Mitte des Rahmenlagers der Hebelfaser;- also nicht schief dazu. Damit ist ein charakteristischer grundlegender Unterschied zum Horizontalpendel eindeutig bezeichnet worden, welches bekanntlich unter dem grundsätzlich anderen Erfindungsgedanken der Nutzung einer labilen Gleichgewichtslage entwickelt worden ist, und das in ganz anderer Weise technisch funktioniert nach dem grundsätzlich anderen Wirkungsprinzip einer schief eingehängten Tür. Das Horizontalpendel funktioniert dadurch auf der physikalischen Grundlage der Nutzung der Wirkung der Schwere, statt auf der physikalischen Grundlage der Nutzung der Wirkung der neutralen Wechselwirkung, wie die Einarmige Torsionswaage. Dieses wohlbekannte Wirkungsprinzip versagt jedoch physikalisch prinzipiell, sobald die Drehachse lotrecht steht, weil dann das Rückstellmoment zur Null-Lage des Gewichtes verschwindet - mit der Folge, daß ein solches Gerät dann technisch ausfällt und nicht mehr funktioniert. Erfindungsgemäß ist genau das Gegenteil davon physikalisch erwünscht und technisch kennzeichnend für für eine maximale Kraftverstärkung, nämlich eine Ausrichtung der vertikalen Kraftlagerhauptachse (0) möglichst genau parallel zur Lotrichtung eines Gewichtes.

Hierauf beziehen sich die weiteren Bestimmungsstücke der Kraftverstärkung, wie die dazu rechtwinklige Richtung der zweiten Kraftlagerhauptachse (0') in horizontaler Richtung statt in vertikaler Richtung, etwa durch die Mitte des Abstandes *a* des Zentrums des Rahmenlagers der Tragfaser und des Zentrums des Rahmentagers der Hebelfaser, sowie der rechtwinklige Abstand *b* des Schwerpunktes des Übergewichtes der Einarmigen Torsionswaage vom Schnittpunkt (0,0') von vertikaler und horizontaler Kraftlagerhauptachse in einer geradlinigen horizontalen Fluchtlinie von Schwerpunkt und von Mitte der beiden Trägerlager (4,5). Aus den figuren 1 und 2 ist alles dies auch unmittelbar abzulesen, indem das erfindungsgemäße Merkmal der Kraftverstärkung dort im vorgenannten Sinne idealisiert hinreichend genau dargestellt und technisch eindeutig unterscheidbar gekennzeichnet ist gegen die bekannte Technologie. Insbesondere besteht für den in Figur 1 veranschaulichten Idealfall, daß die vertikale Hauptachse des Elastischen Kraftlagers und die mittlere Hauptdrehachse der Einarmigen Torsionswaage in einer gemeinsamen Hauptachse "0" praktisch deckungsgleich zusammenfallen, aus Symmetriegründen in erster Näherung eine sehr einfache Beziehung zwischen Lagermittenabstand oder Lagerarm "a" der Trägerlager voneinander, mittlerem Schwerpunktabstand *"b"* des Übergewichts schwerpunktes der Einarmigen Torsionswaage vom Tragfaserlager, und mittlerem Drehradius "$r_s$" der Bewegung des Schwerpunktes des Übergewichtes um die Kraftlagerhauptachse, auf deren Grundlage der Faktor der Kraftverstärkung "$f_{EL}$" des Elastischen Kraftlagers hinreichend sicher zahlenmäßig abzuschätzen ist:

$$r_s \approx b + \frac{a}{2} \qquad\qquad f_{EL} \approx \frac{b}{a}$$

Durch vorgenannte Erläuterungen ist es offensichtlich, daß diese Kennzeichnung der Kraftverstärkung, als eines charakteristischen Merkmals der erfindungsgemäßen technischen Lösung, mathematisch ebenso bequem, wie in erster Näherung ausreichend ist. Andererseits ist durch das genaue Hinsehen auf die Figuren 1,2,3,10 ganz offenkundig zu sehen, daß auf diese Weise eine zwar zahlenmäßig nur kleine Größe unerfaßt bleibt, worin aber eine für Präzisionsmessungen technische entscheidende Funktionsgröße und physikalische grundlegende Ungleichheit steckt. Diese besteht darin, daß es im Elastischen Kraftlager unabhängige mittlere Drehachsen gibt, und zwar eines mittleren Wirkungspunktes der Schwere oder "Schwerpunktes" durch das Übergewicht von zur Erde vertikal gravitierender schwerer Masse der Einarmigen Torsionswaage, und eines mittleren Wirkungspunktes der Trägheitswirkung statt der Gewichtswirkung oder "Massenpunktes" von horizontal rotierender träger Masse um die mittlere Kraftlagerhauptachse aller horizontal drehenden Bauteile der Einarmigen Torsionswaage, welcher im Schnittpunkt der Eigenträgheitsachsen aller dieser Bauteile liegt. Dieses sind getrennte Drehachsen der Wirkung von träger und schwerer Masse, somit physikalisch prinzipiell ungleiche Bezugsachsen, die hier technisch künstlich um einen endlichen Abstand stabil getrennt bleiben: Und zwar bei gedachter idealer Symmetrie der Trägerlager bezüglich der Kraftlagerhauptachse wenigstens um den halben Trägerlagerabstand bzw. den halben Lagerarm "a/2".

Es liegt dabei nahe, einem Anwender eine physikalische "bessere" Lösung technisch anbieten zu wollen, die diesen "kleinen" Mangel behebt, indem diese im Unterschied zur erfindungsgemäßen Lösung dadurch gekennzeichnet ist, daß dieser hiermit künstlich endlich groß gemachte Abstand, und ein hierbei vielleicht direkt meßbarer Unterschied von neutraler Wirkung von träger Masse und von schwerer Masse, physikalisch auszugleichen und praktisch zum Verschwinden zu bringen ist. Ein solcher Versuch zeigt jedoch das Unmögliche dabei, und ergibt damit ganz von selbst das in dieser Hinsicht wesentliche technische allgemeingültige Merkmal der Abgrenzung, Unterscheidung, und Kennzeichnung der Erfindung gegen den bekannten heutigen Stand der gegenwärtigen Technik: Es ist nach dem Vorstehenden offenkundig, daß dafür eine technische Lösung anzustreben ist, womit die Asymmetrie der ungleichen Wirkungszentren von neutraler Masse soweit zu nivellieren ist, und womit die Ungleichheit der Abstände von den unabhängigen Drehachsen soweit zu reduzieren ist, daß diese Unterschiede physikalisch maximal auszugleichen sind, und für meßtechnische oder andere technische Anwendungen praktisch zum Verschwinden zu bringen sind. Das ist technisch zu versuchen in einfachster Weise offenbar dadurch, daß der Geräteträger (6) nicht mit asymmetrischer Massebelegung, sondern mit symmetrischer Massebelegung technisch hergestellt wird, und dabei nicht mit Übergewicht, sondern im statischen Gleichgewicht an die obere Faser (2) angehängt wird: Damit ist aber natürlich die untere Faser und Hebelfaser (9) technisch sogleich einzusparen, weil diese ein so hergestelltes künstliches Gleichgewicht dabei nur noch stören würde; diese wird also technisch nutzlos. Damit kann man aber die Spannvorrichtung (11) auch gleich noch "wegsparen", weil damit auch diese technisch überflüssig geworden ist. Damit ist aber natürlich auch die Kraftverstärkung verschwunden - und damit auch das Elastische Krahlager, und somit auch die Einarmige Torsionswaage.

Das zeigt, was man damit physikalisch erreicht und technisch herstellt, das ist ein gewöhnliches Hängelager und eine gewöhnliche Torsionswaage bzw. ein gewöhnliches Drehpendel. Dadurch ist zu erkennen: Es gibt keine technische Alternative zum Elastischen Kraftlager, weil jeder so umgesetzte technische Versuch eines möglichst idealen physikalischen Ausgleichs ungleicher Massewirkungen auf diese Weise ganz von selbst auf den bekannten Stand der Technik der hochempfindlichsten Kraft- und Bewegungsmeßgeräte führt, den die moderne Naturwissenschaft gegenwärtig kennt, und worüber sie gegenwärtig technisch verfügt, denn das sind genau jene technischen charakteristischen Merkmale, die das bekannte Einfaden-Torsionslager, die bekannte Torsionswaage, das bekannte Torsionspendel, usw. physikalisch auszeichnen und technisch kennzeichnen. Was auf diese Weise technisch hergestellt wird, was damit physikalisch erreicht wird, das ist also keineswegs eine technische bessere Lösung, und das ist keineswegs ein physikalischer Fortschritt, sondern das ist eine Rückkehr zum bekannten technischen Stand, und zu bekannten Erfahrungen des modernen Präzisionsmessens, und zum bekannten Wissen der heutigen Naturwissenschaft. (Beispiele dafür bieten die Figuren 6,7)

Umgekehrt ist damit auch das andere klar, was dabei kaum weniger wichtig ist, nämlich, daß es physikalisch prinzipiell unmöglich ist, die mithilfe der Einarmigen Torsionswaage technisch künstlich verstärkte Wirkung von neutraler Wechselwirkung mit irgendeinem technischen Mittel physikalisch auf Null zu reduzieren oder gar restlos ausschalten

zukönnen. Daraus folgt nämlich: Wenn das physikalisch unmöglich ist, denn besteht speziell im Mikro- und Nino-Bereich von hochgenauen Messungen von kleinsten Größen der physikalischen Erfahrung der technisch letztlich beste und der physikalisch letztlich sicherste Weg darin, nicht zu versuchen, diese Wirkungen physikalisch zu umgehen und technisch zu unterdrücken, sondern ganz im Gegenteil diese physikalisch auszunützen und technisch nutzbar zu machen:

Wie das geschieht, dafür geben das Elastische Kraftlager und die Einarmige Torsionswaage ein technisches Beispiel. Was dieser Vergleich außerdem noch zeigt, liegt klar auf der Hand: Die vorgenannten gegenwärtig empfindlichsten bekannten Kraft- und Bewegungsmeßgeräte der modernen Naturwissenschaft sind demnach ganz allgemeingültig physikalisch als ein Grenzfall und technisch als ein Spezialfall eines Elastischen Kraftlagers und einer Einarmigen Torsionswaage zu erkennen, zu bestimmen, und zu kennzeichnen.

Damit ist zur genaueren Kennzeichnung der technischen Merkmale der Erfindung durch die technischen Daten der ersten Erprobungen der ersten technischen Prototypen überzugehen, die das Vorstehende genauer erläutern, und auf einige spezielle Anwendungsgebiete näher einzugehen.

**3. Ausführungsbeispiele der technischen Lösung des Elastischen Kraftlagers für Nanorelativtechnologie oder für Werkstoffprüfung**

**3.1 Elastisches Kraftlager mit Einarmiger Torsionswaage von 157 g Gewichtsmasse mit 5 mm Lagerarm für Nanorelativtechnologie**

Die nachfolgend beschriebene Einarmige Torsionswaage ist eine Zweiwellen-Torsionsmaschine in lotparalleler Aufstellung des Kraftlagerrahmens gemäß Figur 3 mit kombinierten Kraftfeldantrieb gemäß Ausführungsform 3: Der Träger (6) besteht aus doppeltem U-Profil (H-Profil) aus Aluminium. Die Beladung des Trägers besteht aus meßtechnischen Nutzlasten, wie: mehrere Laser (La); Einschubadapter (N) für Dauermagnet; Kondensator (Ko); elektrische Anschlußadapter für den Kabelbaum; Bleikörper (Ak). Die Gewichtsmasse der Einarmigen Torsionswaage von $m$= 157 g ist die Summe der gewägten Masse aller Herstellungskomponenten des Geräteträgers. Zwischen dem Abstand $b$ des Schwerpunktes des Übergewichtes der Gewichtskraft dieser Gewichtsmasse vom Traglager des Gewichtes und dem Drehradius $r_s$ des Massenpunktes um die Hauptachse des Elastischen Kraftlagers wird gemäß vorstehender Erläuterungen in erster Näherung nicht unterschieden; diese mittlere Länge beträgt: $r_s$ ~ 140 mm. Der Abstand von Mitte Lagerbohrung der Tragfaser bis Mitte Lagerbohrung der Hebelfaser beträgt etwa 5 Millimeter; dieser gibt die Länge des Lagerarmes an: $a$ ~ 5 mm. Diese Abstände kennzeichnen durch ihr Verhältnis von etwa $f_{EL}$ = ($b/a$) ~ 27 den Faktor der Kraftverstärkung der Übergewichtskraft der Gewichtskraft der Einarmigen Torsionswaage, und charakterisieren hierdurch den Grad der damit erlangten Stabilität der Torsionswellen des Elastischen Kraftlagers. Die Gewichtskraft vorstehend genannter Gewichtsmasse beträgt nach üblicher Bestimmung auf Grundlage der Technischen Mechanik durch die mittlere Beschleunigung $g$ des freien Falls von ca. $g$ ~ 9,8 m/s$^2$ als Multiplikator: $F$= $mg$ ~ 1,54 N. Der Unterschied zwischen Übergewichtskraft und Gewichtskraft ist dabei, analog zum Unterschied der Drehradien, in erster Näherung zu vernachlässigen. Mit dem Faktor der Kraftverstärkung als Multiplikator ergibt sich somit die mittlere Absolutgröße der Kraft, welche als Führungskraft $F_1$ in der oberen Torsionswelle und als Führungskraft $F_2$ in der unteren Torsionswelle technisch wirksam gemacht worden ist; diese beträgt etwa: $F_1$~$f_{EL}$· $F$ ~ 42 N

Beide Fasern sind von gleichem Durchmesser von $D$= 0,3 mm, wodurch sich eine mittels der Kraftverstärkung in jeder Torsionsfaser stabil erhaltene mittlere Zugspannung ergibt von etwa σ = 600 N/mm$^2$, anstatt lediglich nur etwa 22 N/mm$^2$ in der Tragfaser einer gewöhnlichen Torsionswaage beim Anhängen des symmetrisch ausbalancierten Trägers an eine solche.

Damit ist also eine Erhöhung der Stabilhaltung der hochelastischen dünnen Fasern um wenigstens etwa das 30-fache erreicht worden: Die damit erreichten technischen Vorteile liegen klar auf der Hand, in allgemeiner technischer Hinsicht durch damit erzielte höhere Sicherheit der Bahnführung der Einarmigen Torsionswaage durch die zusätzliche starke Straffung der Fasern, und in spezieller meßtechnischer Hinsicht durch die hierdurch erzielte erhebliche Verbesserung der Wiederholbarkeit der Registrierung von Bewegungen der Einarmigen Torsionswaage.

Die zeitliche Bewegungsgröße der Einarmigen Torsionswaage und Wiederholungsperiode einer Torsionsschwingung wird über längere Zeiträume in Abhängigkeit vom Faktor der Kraftverstärkung und von der Art des Materials der Fasern charakteristischerweise immer kleiner, ist aber für hinreichend kurze Beobachtungs- und Tagesabschnitte wie eine praktisch konstante Größe anzusehen, und zwar praktisch unabhängig vom räumlichen Ausschlag, wie Bahnweg oder Drehwinkel zwischen den Ruhe- und Wendestellen. Der technische charakteristische Zusammenhang zwischen der Zeitdauer einer horizontalen Eigenbewegung einer Einarmigen Torsionswaage und der Betriebsdauer des Elastischen Kraftlagers zeigt sich in den technischen Kenndaten dieses Prototyps wie folgt:

Übergangsperiode    am 10. März 1998, 17.00 Uhr:    4,941 s
Übergangsperiode    am 11. März 1998, 15.50 Uhr:    4,820 s

**Tabelle fortgesetzt**

| | | |
|---|---|---|
| Übergangsperiode | am 12. März 1998, 14.38 Uhr: | 4,732 s |
| Übergangsperiode | am 13. März 1998, 20.41 Uhr: | 4,634 s |
| Übergangsperiode | am 14. März 1998, 17.15 Uhr: | 4,609 s |
| Übergangsperiode | am 15. März 1998, 09.45 Uhr: | 4,527 s    usw. |

Ab Neuzustand tritt nach einer Betriebsdauer des Elastischen Kraftlagers von 5 Tagen eine Verkleinerung der Anfangsperiode um etwa 8,4% ein; diese Zeitkontraktion der Übergangsdauer der Einarmigen Torsionswaage zwischen ihren horizontalen Ruhe- und Wendestellen verlangsamt sich dann immer mehr, was sich in der Abnahme nach vier Wochen auf etwa 4 s und nicht ganz 8 Wochen auf etwa 3,6 s dieser Übergangsperiode zeigt.

Dieses Erprobungsbeispiel zeigt durch den darin zum Ausdruck kommenden charakteristischen langzeitveränderlichen Zusammenhang von Zeitdauer einer gewöhnlichen Torsionseigenschwingung und von Standzeit des Materials, bzw. von langzeitveränderlicher Materialverformung der Faserkörper, zu messen durch Verlängerung von deren Länge und Kontraktion von deren Durchmesser in bezug der Standzeit, daß die technisch wichtigen Einsatzgebiete des Elastischen Kraftlagers natürlich nicht nur den Bereich der Messung von Wirkungen von neutraler Wechselwirkung betreffen, worauf vorstehend grundsätzlich das Hauptaugenmerk gelegt worden ist. Sondern das sich ausgezeichnete technische Anwendungsbereiche selbstverständlich auch in wirtschaftlichen wichtigen Bereichen der Industrie, ergeben, beispielsweise in der Werkstoffprüfung, so etwa bei der Entwicklung und Prüfung elastischer Hochleistungswerkstoffe. Auf derartige Anwendungen bezieht sich der sechste Patentanspruch.

Im Gegensatz dazu erweisen sich die Größen des räumlichen Überganges und des Ausschlages als Variable erster Ordnung, wie der Drehwinkel der Einarmigen Torsionswaage oder die Wegamplitude ihres Massenpunktes zwischen den Ruhe- und Wendestellen, und als sehr stark veränderliche Beobachtungsgrößen in Abhängigkeit von den einwirkenden Kräften, und zwar über beide Kräftekanäle. Das zeigt sich darin, daß in einfachster Weise über den Kanal der Reaktionskräfte mithilfe mechanischer Stöße auf die Einarmige Torsionswaage künstlich angeregte große horizontale Schwingamplituden von bis zu 3 Millimeter Abstand der periodischen Ruhe- und Wendestellen der Einarmigen Torsionswaage voneinander die Übergänge zwischen diesen Stellen praktisch genauso lange dauern wie dann, wenn statt dessen sehr kleine horizontale Amplituden im Mikrometerbereich in einem Abstand von lediglich 10...20 Mikrometer zu registrieren sind. Das diese räumlich variieren, aber physikalisch prinzipiell nicht verschwinden, das ergibt sich daraus, daß die dafür erforderliche Energie stetig und kontinuierlich zufließt immer durch beide Kanäle: Eine physikalisch prinzipiell nicht abschirmbare physikalische universelle neutrale Wechselwirkung, welche den erfindungsgemäßen neutralen "Kraftfeldantrieb" bildet, und eine praktisch nicht ausschaltbare mechanische Reaktionswirkung, worin der allgemein bekannte mechanische "Rahmenantrieb" infolge von Bodenerxhütterungen, Mikroseismik, usw. besteht. Weil dieser Zufluß von Energie hierbei in ein erfindungsgemäßes physikalisch fast ideal geschlossenes technisches System stattfindet, bestehend aus einem Elastischen Kraftlager und einer Einarmigen Torsionswaage als technische Funktionseinheit in diesem Prototyp, darum sind solche Effekte hiermit nicht nur physikalisch prinzipiell einfach so zu erwarten: Sondern sie müssen bei hoher Güte der technischen Herstellung hierbei sogar physikalisch zwingend in außerordentlicher Größenordnung entstehen. Denn das ist dabei wohlbekannt, daß gerade mit solchen Systemen außerordentliche Wirkungen technisch hervorzubringen sind, die auf keine andere Weise physikalisch zu schaffen sind.

Dennoch fiel die damit technisch hervorgebrachte Größe der Wirkung des Kraftfeldantriebes durch weitreichende neutrale Kraftfelder bei diesem ersten Prototyp eines Elastischen Kraftlagers und einer Einarmigen Torsionswaage mit zunächst lediglich nur etwa 0,24 mm Driftbewegung des Massenpunktes nach links und nach rechts im 6-Stunden-Rhythmus anfangs noch bescheiden und relativ gering aus. Diese Feststellung ist allerdings technisch relativ. Weil nämlich zutreffend so natürlich nur von dem hier dargelegten Standpunkt der erfindungsgemäßen technischen Aufgabenstellung der Schaffung einer neutralen Kraftmaschine und der daran geknüpften Vergleichsmaßstäbe und Erwartungen zur Bewertung technischer Daten, wie sie in Lösung dieser Aufgabe durch die Erprobung erreicht worden sind: Alles dies ist aber natürlich nur durch die Erfindung selbst zu haben; und es wird rechtmäßig bekannt nur durch deren Beschreibung. Darum kann also kein Fachmann, der die Erfindung und vorgenannte technische Kenngrößen ihrer Erprobung nicht kennt, sich danach technisch richten, sondern nur am gegenwärtigen bekannten Stand der Technik orientieren. Dieser aber sieht in genau diesem Punkt bekanntlich ganz anders aus, nämlich so: Der räumliche Skalenausschlag, der mittels bekannter elastischer Spannbandlagerung und damit technisch hergestellter bekannter Horizontalpendel und Gezeitenpendel technisch zu erreichen und physikalisch darzustellen ist, beträgt für eine mittlere Gezeitenperiode von etwa 6 Stunden charakteristischerweise höchstenfalls einige tausendstel Bogensekunden, und zwar zwischen etwa 0,004 Bogensekunden (frühere POTSDAMER GEZEITEHSTATION) bis zu etwa 0,007 Bogensekunden (EUROPÄISCHES GEZEITENZENTRUM BRÜSSEL). Diese räumlichen Ausschläge werden entsprechend der Periodendauer den "Gezeitenkräften" von Sonne oder Mond zugeordnet. Da ein Winkelgrad 3600 Bogensekunden hat, so ist die Wirkung der starken Gezeitenkräfte damit durch Driftwinkel je Gezeitenperiode meßtechnisch darzustellen in einer Größenordnung von 1 bis 2 millionstel Winkelgrad. Der Vergleich damit ist in Kenntnis des vorgenannten technischen Datums eine sehr einfache Rechnung: Der noch keineswegs befriedigende Driftweg des Massenpunktes bei der Ersterprobung von "nur" 0,24 mm ergibt, dividiert durch den Drehradius $r_s$ ~ 140 mm des Massenpunktes dieses Prototyps der Einarmigen Torsionswaage, eine dimensionslose Zahl von etwa 0,00171~ (0,24 mm/140 mm), was in erster Näherung der vergleichbar bestimmte Drehwinkel der Einarmigen Torsionswaage je 6-Stunden-Periode in Radiant ist. Mithilfe der Umrechnungseinheit 57,3° von Radiant in Winkelgrad als Multiplikator ergibt sich die technische Vergleichsgröße des Drehwinkels dieses ersten Prototyps der Einarmigen Torsionswaage je eine mittlere Gezeitenperiode von etwa: $\alpha$ ~ 0,1°, also ungefähr 1 zehntel Winkelgrad, anstatt 1 millionstel bis 2 millionstel Winkelgrad. Damit ist das diesbezügliche technische charakteristische Unterscheidungsmerkmal klar zu sehen, nämlich ein damit erreichter Sprung der Beobachtungsgenauigkeit um Größenordnungen von 50000fach bis 100000fach gegenüber dem, was gegenwärtig hochempfindlichste Meßgeräte bei der Registrierung von Wirkungen von "Gezeitenkräften" durch seismische Mikrobewegungen der festen Erde physikalisch bieten und technisch leisten.

Daß die charakteristische mittlere Periodendauer einer solchen Driftbewegung einer Einarmigen Torsionswaage von ungefähr 6 Stunden eine Wirkung einer neutralen Wechselwirkung anzeigt, die in einem direkten Zusammenhang steht mit den grundlegenden Naturerscheinungen der allgemeinen Gravitation und universellen Massenanziehung beliebiger Himmelskörper in festen Richtungen zueinander und der allgemeinen Rotation und des universellen Massenumlaufs beliebiger Körper um raumfeste Drehachsen der Himmelskörper, das ist dabei aus Figur 8 unmittelbar abzulesen, welche das Wirkungsprinzip der Erfindung veranschaulicht: Die Einarmige Torsionswaage nimmt an der allgemeinen Rotation von neutraler Masse beliebiger Körper der festen Erdoberfläche um die raumfeste Erdachse in deren mittlerer konstanter Tagesperiode von 24 Stunden und an der allgemeinen Gravitation von neutraler Masse in fester Richtung zu Sonne, Mond, usw. teil. Dadurch ergibt sich ein viermaliger Wechsel zwischen zwei Maxima und zwei Minima der einheitlichen Wirkung der unabhängigen neutralen Wechselwirkungen, und somit eine charakteristische mittlere konstante Wirkungsperiode von 24 Stunden : 4 = 6 Stunden, was durch die mittlere konstante Driftperiode von etwa 6 Stunden mit der Einarmigen Torsionswaage physikalisch direkt zu beobachten ist.

Um die Größen der Driftbewegung genauer kennenzulernen, sind noch die Verdrillungskraft bzw. das Rückstellmoment der elastischen Torsionsfasern des Elastischen Kraftlager sowie die Richtkraft der Einarmigen Torsionswaage zu kennen. Wie im folgenden Beispiel ausgeführt, ist es möglich, mithilfe der Form der Bewegungsgleichung die Kraft zu bestimmen, womit die träge Masse der Einarmigen Torsionswaage in horizontaler Richtung gegen die Schubkraft der Fasern wirken muß für einen Drehwinkel von 1°. Unter Verwendung dieser winkelbezogenen Richtkraft als eine Bezugskraft war durch die erhaltene mittlere Größe des Driftwinkels von $\alpha$ ~ 0,1° eine *mittlere* Driftbeschleunigung dieses ersten Prototyps von etwa 0,00014 m/s$^2$ zu bestimmen. Der Vergleich mit der aus der Himmelsmechanik bekannten mittleren Anziehungsbeschleunigung von 0,006 m/s$^2$ von schwerer Masse im Abstand der Erde von der Sonne in der Richtung zur Sonne durch deren Anziehungskraft ergibt eine Relation der Driftbeschleunigung des Massenpunktes von träger Masse der Driftbewegung dieser ersten Einarmigen Torsionswaage zur Anziehungsbeschleunigung von schwerer Masse zur Sonne von nur etwa 2,2%. Das bedeutet, daß die technische Zielsetzung der Nutzung der Energie der neutralen Wechselwirkung mit diesem ersten Prototyp mit einem Wirkungsgrad der Umwandlung der Antriebsenergie neutraler Kraftfelder in Bewegungsenergie der Einarmigen Torsionswaage erreicht wurde, der noch erheblich steigerungsfähig ist. Damit ergab sich die neue technische Aufgabe, diesen Wirkungsgrad durch Herstellung eines zweiten Prototyps mit veränderten technischen Charakteristika zu verbessern, wofür ein Elastisches Kraftlager mit kleinerem Lagerarm und stärkeren Fasern und zur Vergrößerung des Kraftmomentes der Antriebskraft der neutralen Wechselwirkung eine Einarmige Torsionswaage mit *größerem Bleikörper* hergestellt wurde.

**3.2 Elastisches Kraftlager mit Einarmiger Torsionswaage von 310 g Gewichtsmasse mit 2,5 mm Lagerarm für Nanorelativtechnologie**

Die nachfolgend beschriebene Einarmige Torsionswaage ist eine Zweiwellen-Torsionsmaschine in lotparalleler Aufstellung des Kraftlagerrahmens mit einem einfachen Kraftfeldantrieb gemäß vorgenannter Ausführungsform 1. Die Gewichtsmasse der aus Geräteträger aus Aluminium-H-Profil, aus Bleikörper, Laserstrahler, elektrischen Anschlüssen, und aus weiteren Bauteilen bestehenden Einarmigen Torsionswaage beträgt:

Gewichtsmasse der Einarmigen Torsionswaage $\qquad m$ ~ 310 g

Der resultierende Dreharm $r_s$ des Mittelpunktes aller Eigenträgheitsmomente aller horizontal drehenden Hauptbauteile um die Kraftlagerhauptachse als raumfeste Bezugsachse und Drehradius des wrkungszentrums *von träger Masse* hat die Länge von:

horizontaler Dreharm der Einarmigen Torsionswaage $\qquad r_s$ ~ 70 mm

Der Abstand $b$ des Schwerpunktes des Übergewichtes der Gewichtsmasse der Einarmigen Torsionswaage vom Tragfaserlager wird für die Bestimmung der Kraftlagerverstärkung *einfacherweise* damit als etwa gleich groß angesehen, somit

vertikaler Kraftarm der Einarmigen Torsionswaage: $\qquad b$ ~ $r_s$

Zwischen der Mitte der Trägerlager von Trag- und Hebelfaser hat im Geräteträger der

Lagerarm der Einarmigen Torsionswaage die Länge von: $a \sim 2{,}5$ mm

Die Kraftverstärkung der Übergewichtskraft der Einarmigen Torsionswaage ist damit konstruktiv festgelegt mit einem Faktor der Kraftverstärkung des Elastischen Kraftlagers von fast gleicher Größe wie beim ersten Prototyp,

Faktor der Krahverstärkung des Elastischen Kraftlagers $b/a \sim 27$

Die Gewichtskraft der Einarmigen Torsionswaage beträgt etwa $F \sim 3{,}04$ N; die Übergewichtskraft ist nicht viel kleiner; die durch die Kraftverstärkung stabil erhaltene mittlere konstante Größe der faserparallelen Spannkraft in Tragfaser und Hebelfaser beträgt ungefähr das 27fache davon, somit:

Stabilisierungskraft der Torsionsfasern $F \sim 82$ N

Die Tragfaser und die Hebelfaser besitzen den gleichen mittleren

Durchmesser des Materialkörpers der Torsionswelle: $D \sim 0{,}4$ mm

Infolge des 1/3 vergrößerten Durchmessers ist die Schubkraft bzw. das Rückstellmoment der Torsionsfasern jetzt fast 3-fach so groß als beim ersten Prototyp; die mittlere konstante Größe der faserparallelen Zugspannung für die Stabilführung von Trag- und Hebelfaser ist um etwa 10% erhöht:

Zugspannung in den Torsionsfasern $\sigma \sim 650$ N/mm$^2$

Das resultierende Trägheitsmoment der Einarmigen Torsionswaage ist in bekannter Weise durch die Summe aller Trägheitsmomente aller Bauteile zu bestimmen, die um eine feste Drehachse gemeinsam drehen. Der dabei resultierende Trägheitsradius kennzeichnet den Abstand des Zentrums der Wirkung von träger Masse oder Massenpunktes von träger Masse der Einarmigen Torsionswaage. Bezüglich der Kraftlagerachse in vereinfachter Auffassung wie vorstehend erläutert als Koinzidenzlinie von idealer Symmetrieachse durch die Mitte des Lagerarmes des Geräteträgers und von Fluchtlinie durch die Mitte der Rahmenlager der Torsionswellen beträgt bei diesem zweiten Prototyp das

Trägheitsmoment der Einarmigen Torsionswaage: $J \sim 0{,}0015$ kg m$^2$

Für die Ermittlung der *winkelbezogenen Richtkraft des* Elastischen Kraftlagers in erster Näherung durch Wirkung von träger Masse statt schwerer Masse bezüglich eines Massenpunktes einer neutralen Wirkung durch Trägheitsmomente anstatt eines Massenpunktes einer neutralen Wirkung durch Schwerkraftmomente, also bezüglich eines Dreharmes um die Hauptdrehachse "0" gleich dem resultierenden Trägheitsradius $r_s$ von horizontal rotierender asymmetrischer Gewichtsmassebelegung, anstatt eines Dreharmes um die horizontale Hauptdrehachse "0'" im Abstand $b$ des Übergewichtes der vertikal gravitierenden Gewichtsmassebelegung, hat man somit bei einer Einarmigen Torsionswaage, die nach Ausführungsform 3 hergestellt worden ist, die Wahlzwischen drei verschiedenen Möglichkeiten. Entweder wird die für die physikalische Bestimmung erforderliche Eichkraft technisch zur Verfügung gestellt

- mittels magnetischer Kraft eines magnetischen Kraftfeldes bezüglich des Abstandes des Mittelpunktes der Polstärke des mitgeführten Magneten (Mg) von der Kraftlagerachse; oder

- mittels elektrostatischer Kraft eines elektrostatischen Kraftfeldes bezüglich des Abstandes des Ladungszentrums des mitgeführten Kondensator (Ko); oder

- mittels Gewichtskraft eines Gewichtskörpers bezüglich des Abstandes eines mechanischen Angriffspunktes an der Einarmigen Torsionswaage, statt eines magnetischen oder elektrostatischen Wirkungspunktes.

Für die Ausführung ohne kombinierten Feldkraftantrieb kommt regelmäßig nur *letztere* Möglichkeit der Bestimmung der winkelbezogenen Richtkraft mittels einer Gewichtskraft als Eichkraft in Betracht. Das geschieht in an sich bekannter Weise, also entweder durch Neigungskraft vermittels einer kleinen Schiefstellung des Kraftlagerrahmens, oder durch horizontale Zugkraft eines Fadens, der im Abstand $r_s$ von der Kraftlagerachse einhängt, und der die Gewichtskraft einer zur Erde vertikal angezogenen kleinen Masse umlenkt, usw. - Nach letzterem Verfahren wurden mittels der Gewichtskraft kleiner Gewichtsmassen von bis zu ungefähr 0,1 g Auslenkungswinkel der Einarmigen Torsionswaage gegen das Rückstellmoment des Elastischen Kraftlagers künstlich erhalten; die Gewichtskraft abzüglich Reibungskraftverluste infolge der Umlenkung dividiert durch die Größe des erhaltenen Drehwinkel ergibt die in horizontaler Ebene wirkende winkelbezogene Richtkraft der Einarmigen Torsionswaage bezüglich des Abstandes des Wirkungszentrums ihrer trägen Masse von ihrer Drehachse. Der hierdurch bestimmte Mittelwert ergibt die

Richtkraft je 1 ° Drehwinkel; winkelbezogene Richtkraft. $F_A \sim 0{,}00097$ N/°

Für diese technische Kennzeichnung der Richtwirkung des Elastischen Kraftlagers durch eine Kraftwirkung der Einarmigen Torsionswaage, statt wie allgemein üblich durch ein ausschließlich materialbezogenes Verdrillungsmoment oder Torsionsmoment der Fasern selbst, ist zu beachten, daß diese physikalische Definition der Bezugskraft durch ein Meßverfahren direkt durch eine Wirkung der Einarmigen Torsionswaage selbst natürlich einen physikalischen prinzipiellen Vorteil bedeutet, aber in anderer Hinsicht in eben diesem Sinne durchaus auch ein Nachteil sein kann: Letzterer besteht hier darin, daß durch das gewählte Verfahren keine Feldkraft zur Wirkung zu bringen ist, sondern das damit eine ganz gewöhnliche Gewichtskraft zur Eichkraft gemacht wird für sämtliche darauf beruhenden Bestimmungen von Wirkungen von neutraler Wechselwirkung. Und, was das wichtigste dabei ist, nicht nur durch Masse und Kraft, sondern auch durch Geschwindigkeit und deren Änderung, also durch Beschleunigung. Hierdurch kommt ganz von selbst die physikalische prinzipielle Frage nach Äquivalenz von dimensionsgleichen Bewegungsgrößen in Raum und Zeit und von Wirkungsgrößen durch Masse und Kraft als eine entscheidende Frage für eine sichere Vergleichbarkeit der zahlenmäßigen technischen Daten direkt in den Meßvorgang selbst unvermeidlich hinein. Das wird durch die Beschränkung auf dieses eine Verfahren natürlich technisch nicht gelöst, sondern technisch umgangen: Die mittlere Beschleunigung der Einarmigen Torsionswaage ist durch die winkelbezogene Richtkraft direkt durch neutrale Wirkungen bestimmt, anstatt direkt durch Raum und Zeit. Dadurch aber ist bekanntlich die Fallbeschleunigung definiert und bestimmt, und dadurch wiederum die Standardbeschleunigung der Schwerebeschleunigung, und dadurch wiederum ist die Gewichtskraft sowie Übergewichtskraft der Einarmigen Torsionswaage zu definieren und zu bestimmen. Insofern besteht hierbei offenkundig ein weitgespannter großer logischer Zirkel, in den man durch ein solches Verfahren von selbst hineinkommt, aber so damit nicht wieder herauskommt. Daß das zwar physikalisch ganz allgemeingültig ganz unbedenklich so möglich sei, das ist zwar nach der Bewegungsgleichung selbstverständlich, weil dadurch Kraft und Masse durch Beschleunigung nicht prinzipiell äquivalent, sondern prinzipiell identisch zu vergleichen sind. Dabei ist jedoch wichtig zu beachten, was das vorstehende Ausführungsbeispiel schon klar gezeigt hat, nämlich die extreme Empfindlichkeit und technische Hochleistungsfähigkeit der Einarmigen Torsionswaage, und die damit physikalisch ganz von selbst stabil erhaltene regelmäßig zwar kleine, aber dennoch scharfe Trennung der Wirkungspunkte von Schwere und Trägheit. Unter diesen Bedingungen ist dieses allgemeinübliche dimensionslose Verhältnis von Eins zu Eins von raumzeitbestimmten (neutralen) Bewegungsgrößen oder von wechselwirkungsbestimmten dimensionsgleichen (neutralen) Wirkungsgrößen logischerweise nicht mehr kritiklos einfach zu übernehmen, sondern physikalisch zu prüfen: Dafür gibt die Technik der Nanorelativtechnologie selbst auch die erforderlichen neuen technischen Mittel an die Hand. Allerdings, es genügt nicht, diese Technik zu haben, was durch vorstehende Bemerkungen völlig klar ist, weil daraus nämlich auch das andere dabei noch Wichtige hervorgeht, daß dafür nämlich außerdem auch logische eindeutige Bestimmungen für physikalisch prinzipiell unabhängige Sachverhalte gebraucht werden. Genau diese aber hat man bei bekannten Verfahren nicht, und genau diese verschafft man sich auf diese Weise so physikalisch prinzipiell nicht.

Somit: Wie groß genau die Wirkung von neutraler Wechselwirkung durch eine von der Erdschwere unabhängige eigene Verschiebungskraft von träger Masse der Einarmigen Torsionswaage in horizontaler Richtung ist, womit diese gegen die Drillkraft der Torsionskörper des Elastischen Kraftlagers in horizontaler Ebene dreht um einen Drehwinkel von 1°, das bleibt dadurch zunächst einmal physikalisch prinzipiell unbestimmt - trotzdem man eine diesbezügliche Wirkung direkt mißt. Genau darüber erfährt man durch eine solche Bestimmung und Messung der Größe der Richtkraft nämlich nichts. Aber natürlich auch nicht durch eine in allgemein bekannter Weise ausgeführte Trägheitsmomentbestimmung mittels Pendelverfahren und Schwingzeitmessung, weil die gleichen physikalischen prinzipiellen Unsicherheiten dabei wieder auftreten, und zwar regelmäßig in sogar noch weitaus schwieriger zu erfassender Form. Auch darum reicht für eine hinreichend sichere Abschätzung der Größenordnung der Wirkung ganz offenkundig das technische einfachste Verfahren für die Ersterprobung eines Prototyps aus, worauf es hier ja ankommt. Dies hat natürlich auch den technischen Vorteil einfacherer Herstellung der Einarmigen Torsionswaage infolge des Verzichtes auf unabhängige Kraftfeldantriebe für sich. Außerdem umgeht man - technisch bequemerweise - damit zunächst einmal alles das, was für die volle Ausschöpfung der technischen Vorzüge der Einarmigen Torsionswaage, wie diese im ersten Erprobungsbeispiel sich schon zeigen, dann letztlich zwar doch nicht zu umgehen ist, worauf aber an dieser Stelle getrost verzichtet werden kann, nämlich auf die dafür und dabei physikalische zwingende und technische unerläßliche Prüfung des ganzen Bündels von Voraussetzungen, derer man sich hier bedient, wenn man auf diese einfachste Weise die winkelbezogene Richtkraft mißt, und anschließend damit die winkelbezogene Driftbeschleunigung ermittelt,

wie Identität von neutraler Masse durch schwere Masse und träge Masse,

wie Identität von neutraler Kraft durch Schwerkraft und Trägheitskraft,

wie Identität von Relativbewegung und Relativgeschwindigkeit von neutraler Masse durch unbeschleunigte Relativbewegung oder relativer Ruhe von schwerer Masse oder von träger Masse oder von Gewichtsmasse.

Indem man so vorgeht, hat man noch einen weiteren Vorteil, denn weil zumindest die erstgenannte vorstehender Voraussetzungen eine allgemein bekannte und allgemein anerkannte grundlegende Voraussetzung der modernen Mechanik ist, so bleibt man damit - physikalisch bequemerweise - vorerst in bester Übereinstimmung mit der physikalischen allgemeinen Erwartung. Daß infolge dieses Verzichts allerdings eine physikalische prinzipielle Unsicherheit eines jeden auf einer solchen Grundlage stehenden Versuches einer zahlenmäßigen genaueren Kennzeichnung von wesentlichen technischen Merkmalen und technischen Leistungsdaten besteht; und daß das somit nicht nur ganz allgemein gilt, sondern im Besonderen daher ganz konkret bei allen hier vorliegenden zahlenmäßigen genaueren Bestimmungen der technischen Daten der Erprobung der Erfindung, das ist aus vorgenannten Gründen dabei fest im Auge zu behalten, und zwar gerade auch darum, weil das natürlich eben kein Merkmal der Technik ist, und darum von diesem Standpunkt eigentlich ganz uninteressant ist. Wohl aber sind das unverzichtbare Mittel der Kennzeichnung von Technik, die dafür höchst interessant und von außerordentlicher groBer Bedeutung sind, und zwar gerade zur Kennzeichnung von neuer Technologie und Technik.

Diese zweite Einarmige Torsionswaage hatte am zweiten Tag nach der Inbetriebnahme die

mittlere Übergangsperiode von $\qquad$ $T \sim 3{,}30$ s

Die Wirkung des hergestellten neuen Kraftfeldantriebs war auf dem Vermessungsblatt durch horizontale Laseramplituden im 6-Stunden-Rhythmus abzulesen von einer Größenordnung von bis zu etwa 30 mm; das entspricht also im Mittel einem ungefähren mittleren

Driftwinkel um die Kraftlagerachse von: 0,4°

sowie einem ungefähren horizontalen mittleren

Driftweg des Massenpunktes von träger Masse von: 0,9 mm.

Unter Berücksichtigung vorstehender Bemerkungen ist es nun leicht möglich, damit eine mittlere Wirkung der neutralen Wechselwirkung durch eine mittlere neutrale Verschiebungskraft oder Driftkraft zu bestimmen, die in einer Form wie eine gewöhnliche mechanische Kraft der Erhaltung einer langsamen Driftbewegung der Einarmigen Torsionswaage zum Ausdruck kommt, womit sich die träge Masse der Einarmigen Torsionswaage gegen die Richtkraft des Elastischen Kraftlagers in horizontaler Ebene nach links oder nach rechts periodisch bewegt und verschiebt. Die Größe der hierdurch als Antriebskraft der Driftbewegung der Einarmigen Torsionswaage technisch wirksam gemachten Kraft ergibt sich aus der Größe des Drehwinkels gegen die Anfangsrichtung der Einarmigen Torsionswaage am Beginn der Drift multipliziert mit der winkelbezogenen Richtkraft des Elastischen Kraftlagers: $F_A$ = (0,00097 N/° x 0,4°). Das Resultat dieser Bestimmung ist eine mittels des zweiten Prototyps erhaltene Größe der mittleren konstanten horizontalen

Verschiebungskraft oder Driftkraft der Einarmigen Torsionswaage von: $F_A \sim$ 0,00039 N

Hieraus ergibt sich die Größe der *mittleren konstanten Antriebsbeschleunigung* zur Aufrechterhaltung der Driftbewegung in einfachster Weise, wenn man, wiederum unter Beachtung vorgenannter Einschränkungen, hierbei die allgemein für selbstverständlich gehaltene Voraussetzung der Gleichheit von träger Masse gleich schwerer Masse, und beides auch noch identisch mit Gewichtsmasse, verwendet, weil dann auf dieses Ergebnis die bekannte Form der Bewegungsgleichung bzw. Bewegungsgesetzes unmittelbar anwenden ist: $a_A = F_A / m$

Hierdurch ergibt sich durch die Driftkraft der Einarmigen Torsionswaage und durch die driftende träge Masse durch die identische Gleichsetzung mit der gewogenen Masse im statischen Ruhezustand der Einarmigen Torsionswaage die mittlere konstante

Driftbeschleunigung der Einarmigen Torsionswaage von $a_A \sim$ 0,0013 m/s$^2$.

Der Vergleich mit der astronomisch bestimmten *Zentralbeschleunigung* von *schwerer* Masse mit der Erde mitbewegter Körper in die Richtung zur Sonne von ungefähr 0,006 m/s$^2$ ergibt eine Relation der Driftbeschleunigung von träger Masse der Einarmigen Torsionswaage durch eine periodisch wechselnde, jedoch in konstanter Größe wiederkehrende Variation ihrer Verschiebungs- und Driftkraft zur Anziehungsbeschleunigung ihrer schweren Masse zur Sonne durch deren konstante Anziehungskraft dorthin von fast 22%: $\eta_A$=(0,0013m/s$^2$/0,006m/s$^2$) $\sim$ 0,22

Das bedeutet, der technische Wirkungsgrad der technisch wirksam gemachten Nutzung der Wirkung von neutraler Wechselwirkung, in Form von meßtechnisch nutzbarer Antriebskraft und Antriebsbeschleunigung der Driftbewegung der Einarmigen Torsionswaage, ist mit dem zweiten Prototyp bereits ungefähr 10-fach größer zu erhalten als mit dem ersten Prototyp.

Die Größe der damit umgewandelten Energie der neutralen Wechselwirkung in für meßtechnische Zwecke hervorragend nutzbare mechanische Antriebsenergie der Driftbewegung der Einarmigen Torsionswaage ist unter Beachtung aller vorgenannten Voraussetzungen nun sehr einfach zu bestimmen, denn diese ist damit in einfachster Weise der mittleren konstanten Driftarbeit gleich, womit die mittlere konstante Driftkraft der trägen Masse der Einarmigen Torsionswaage diese in horizontaler Ebene abwechselnd nach links oder nach rechts verschiebt; also: $W_A = F_A \cdot s$ = (0,00039 N· 0,0009 m). Dadurch ist die mittels eines Elastischen Kraftlagers und einer Einarmigen Torsionswaage technisch wirksam gemachte Wirkung von neutraler Wechselwirkung regelmäßig im Nanobereich der Energie zu erkennen; diese den meßtechnischen Verwendungszweck kennzeichnende Größe ergibt durch die vorgenannten Daten der Erprobung die mittlere konstante

Driftarbeit der Einarmigen Torsionswaage von $W_A \sim$ 3,5 10$^{-7}$ J

Die hohe Empfindlichkeit für Wirkungen von allgemeiner neutraler Wechselwirkung, und die Kleinheit von technisch wirksam gemachten Wirkungen von allgemeiner neutraler Wechselwirkung bis zum Nanobereich und bis zum quasiatomaren Bereich sind ein allgemeines charakteristisches technisches Merkmal einer erfindungsgemäßen technischen Funktionseinheit, die aus Elastischem Kraftlager und Einarmiger Torsionswaage hergestellt ist. Dieses allgemeine technische charakteristische Merkmal ist durch die vorstehend mitgeteilten Daten beider Erprobungen gekennzeichnet worden. Diese machen aber auch folgendes deutlich: Die Nanodimension ist damit nicht in allgemein bekannter Weise durch bekannte Arten von atomarer Wirkung oder molekularer Wechselwirkung kleinster Teilchen technisch zu erschließen, was in wiederholbarer Weise meßbar zu machen ein technisches kennzeichnendes Merkmal bekannter hochempfindlicher Meßgeräte ist, die oft sogar speziell auf diesen Anwendungsbereich technisch zugeschnitten und genau dafür entwickelt sind. Denn eine Wirkung von atomarer Wechselwirkung ist durch wesentlich andere Nano-Merkmale gekennzeichnet, die nicht durch stetige kontinuierliche neutrale Wechselwirkung und nicht durch systematische Driftbewegung physikalisch allgemeingültig zu erfahren sind, sondern eben durch solche Merkmale wie zufällige Drift durch chaotisch wechselnde Stöße mikroskopischer Teilchen: Darum ist bekanntlich die Drehwaage ein technisches ausgezeichnetes Mittel der Wahl auch zur Bestimmung der Grundkonstante der Atomphysik - der AVOGADRO-konstante - aus genau solchen zufälligen horizontalen Schwankungsbewegungen infolge molekularer Wechselwirkung. Im Unterschied und Gegensatz dazu sind langsame systematische horizontale Driftbewegungen in der dafür erforderlichen Größenordnung der Wiederholbarkeit damit nicht zu messen, sondern damit bestenfalls als systematische Störungen zu registrieren, was physikalisch natürlich ebenso unbefriedigend wie technisch unzulänglich ist.

Durch vorstehende Ausführungsbeispiele ist klar, das diesbezüglich nicht nur ein physikalischer grundlegender Unterschied, sondern auch ein technischer und technologischer charakteristischer Unterschied besteht. Dieser offenbart sich in der Gegenüberstellung darin, daß im Unterschied zu bekannter Technologie hochempfindlicher Torsionsmeßtechnik für die Registrierung vorzugsweise von NanogröBen der Wirkung und Wechselwirkung mikroskopischer Strukturen mittels neuer Technologie der Herstellung hochempfindlicher Torsionsmeßtechnik vermittels eines Elastischen Kraftlagers neuartige hochempfindliche Meßgeräte für die Registrierung von Nanogrößen von ganz andersartigen Naturerscheinungen technisch zu schaffen sind, vorzugsweise für die Registrierung von extrem langsamen, sich systematisch wiederholenden stetigen kontinuierlichen Bewegungen, die von regelmäßig sehr starken Kräften durch physikalische universelle neutrale Wirkungen und neutrale Wechselwirkungen physikalisch erhalten bleiben, aber nicht durch rasche zufällige Schwankungen infolge mikroskopischer Impulse bei molekularen Wirkungen von atomarer Wechselwirkungen. Hierbei ist es übrigens durch die im heutigen Stand der modernen Technik verkörperte Erfahrung selbst ganz offenkundig, daß es unmöglich ist, mit bekannten technischen Mitteln eine Technologie zu schaffen und Meßgeräte herzustellen, womit Nanogrößen von kleinsten Änderungen von starken neutralen Wirkungen, wie neutrale Masse, allgemeine Rotation, allgemeine Gravitation, usw., die sich durch neutrale Wechselwirkungen eben solcher Wirkungen selbst erhalten, also durch solche von träger Masse und von schwerer Masse, von allgemeiner Rotation und von allgemeiner Gravitation, in einer dafür hinreichenden Größenordnung empfindlich genug zu messen und sicher wiederholbar zu erfahren sind: Genau das schafft nämlich bekanntlich keine Drehwaage, kein Horizontalpendel, usw. Dabei geht es also klar erkennbar für die technische Aufgabe somit in ganz anderer Weise um die Messung von kleinsten Größen von Wechselwirkungen von stabilen Makrostrukturen und von Relativbewegungen großer Strukturen und makroskopischer Körper zueinander, und nicht um die von kleinsten Größen von Wechselwirkungen von Mikrostrukturen und von Bahnbewegungen von Teilchen. Nanogrößen von der ersteren Art sind es, und nicht von der letzteren, die mit einer Einarmigen Torsionswaage durch deren Driftbewegung direkt zu registrieren sind. Unter diesem Gesichtspunkt ist es offenkundig, daß es sich hier um in charakteristischer Weise grundlegend verschiedene höchstempfindliche Technik und Hochtechnologie für grundverschiedene Anwendungsbereiche handelt. Denn für die Registrierung kleinster Schwankungen und kleinster Wirkungen von regelmäßig mikroskopischer Wechselwirkung von kleinsten Bereichen oder gar von Teilchen ist die Einarmige Torsionswaage technisch nicht hergestellt, was durch diese Beschreibung klar ist, und dafür ist sie technisch regelmäßig auch nicht geeignet: In dieser Hinsicht ist die Drehwaage technisch überlegen, so daß sie dafür auch das Mittel der Wahl bleiben wird.

Der Vergleich des Standes der Technik und der vorgenannten technischen Daten der Erprobung der Einarmigen Torsionswaage offenbart den allgemein kennzeichnenden technischen Unterschied vollends, wenn noch das wesentliche charakteristische Unterscheidungsmerkmal hinzugenommen wird, das durch die grundverschiedenen technischen Aufgaben hier besteht, die hierbei unter einem einheitlichen Merkmal einer Registrierung von Nanogrößen technisch zu lösen sind: Mittels bekannter Torsionsmeßsysteme sind regelmäßig und vorzugsweise Nanogrößen der Wirkung von Mikrostrukturen oder von Mikrobewegungen zu registrieren. Mittels erfindungsgemäßer Torsionsmeßsysteme, das zeigen vorgenannte Daten der Erprobung, ist hingegen regelmäßig und vorzugsweise die ganz anders gelagerte technische Aufgabe zulösen, Nanogrößen der Wirkung von Makrostrukturen und von Relativbewegungen zu registrieren. Diese sind darum dann das Mittel der Wahl, wenn es um die Lösung technischer Aufgaben bei der meßtechnischen Darstellung von Nano-Größen von kleinsten Änderungen von starken Wirkungen und von systematischen relativen Bewegungen von Makrostrukturen zueinander geht, weil dann nämlich regelmäßig solche Größen zu messen sind, wie Driftweg, Driftgeschwindigkeit, Driftbeschleunigung, Driftkraft, Driftenergie, usw. - also alles Größen, die man so in der Mechanik nicht kennt, weil bekannte mechanische Meßgeräte dafür um Größenordnungen zu unsicher sind: Und wo technische Mittel für reproduzierbare Erfahrungen fehlen, da hat man bekanntlich keine sicheren physikalischen Grunderfahrungen. Die man so aber natürlich auch nicht kennt durch bekannte mikrophysikalische Erfahrungen, weil bekannte Meßgeräte von hoher Empfindlichkeit für die Nanodimension der Erfahrung der Atom- und Teilchenbereiche regelmäßig für die meßtechnische Lösung einer diesbezüglich ganz anders gelagerten technischen Grundaufgabe hergestellt sind. Infolgedessen ist selbstverständlich auch die praktische, die technische, und die physikalische Bedeutung ganz anders gelagert: Die Erfahrung von Nanogrößen aus dem Bereich der Makrowelt statt der Mikrowelt hat große Bedeutung für die Erfahrung der Umwelt und für die Technologie der Infrastrukturen. Dabei geht es eben nicht um Messung von zufallsgeprägten mechanischen Mikrobewegungen, wie man sie kennt durch Verkehrserschütterung, Sprengwirkung, fernen Erdbebenstoß, usw., denn diese Aufgabe ist mittels mechanischer Meßgeräte von bekannter seismischer Technik technisch zu lösen. Aber diese Technik versagt bekanntlich, und genau das hat auch die vorstehende Gegenüberstellung Horizontalpendel - Einarmige Torsionswaage gezeigt, immer genau dann, wenn es um die ganz andere technische Grundaufgabe geht, langsame systematische Bewegungen infolge stabil wirkender starker Kräfte sicher wiederholbar in Erfahrung zu bringen. Dafür braucht man eine besondere Technik, und dafür benötigt man eine spezielle Technologie, womit eben genau das technisch zu machen ist. Dadurch ist der Unterschied durch allgemeingültige charakteristische Merkmale klar zu erkennen, der zwischen einer so gekennzeichneten neuen Nanorelativtechnologie und einer in bekannter Weise gekennzeichneten Nanotechnologie besteht. Übrigens ist dabei durch physikalische Merkmale sogar noch schärfer abzugrenzen, als durch technische Merkmale, denn daß die Erfahrung von Relativbewegungen von Mikrostrukturen physikalisch desto unschärfer wird, je genauer man diese technisch zu messen versucht, das ist inzwischen sogar als ein Grundmerkmal jener Mikrowelt anerkannt. Das bedeutet, dem Fortschritt der Naturerfahrung ist mit den bekannten Techniken der Nanotechnologie hierbei eine physikalische prinzipielle Grenze gezogen. Das Gleiche gilt von bekannter Technologie für mechanische Präzisionsmessung kleinster mechanischer Größen - wie Drehwaage, Horizontalpendel, aber auch Schwerependel, - zur Lösung von technischen Aufgaben im Zusammenhang der Erfahrung von Wirkungsgrößen von Makrostrukturen von Masse, wie der Schwere der Erde, oder der globalen Umwelt durch Echtzeitmessung von Driftbewegungen von geologischen Makrostrukturen.

Auch hier steht heute man bekanntlich an einer technischen Grenze: Das Reversionspendel beispielsweise war für länger als anderthalb Jahrhunderte das Mittel der Wahl für hochgenaue absolute Schweremessungen. Es ist daraus inzwischen völlig verdrängt worden durch die Freifalltechnologie, die das andere Extrem wählt, und auf Lagertechnik ganz verzichtet, darum, weil die lagertechnologie der oberflächenbeweglichen Pendel- und Drehlager die heutigen Ansprüchen an eine sicher wiederholbare Erfahrung schon im Mikrobereich der Beschleunigung nicht mehr erfüllt; - vom Nanobereich gar nicht zu reden. Im Gegensatz dazu sind die Drehwaage wie das Drehpendel in der heutigen Nanotechnologie unverzichtbare Hochleistungsinstrumente. Daß man diese dabei, ihrer extrem hohen Genauigkeit wegen, auch gern einmal außerhalb von technologischen Aufgaben einsetzt, etwa zur Testung von Hypothesen (Fig. 7), das ist dabei eher ein technischer Nebeneffekt. Wo man dabei mitunter jedoch das technische Einsatzgebiet von Nanorelativtechnologie berührt, so erhält damit - logischerweise -, negative Resultate, weil deren anderes Wirkungsprinzip und deren andere Funktionsweise dafür physikalisch prinzipiell eben nicht geeignet ist, und weil diese dafür technisch grundsätzlich auch nicht hergestellt sind. Denn das ist durch Vorstehendes nun völlig deutlich geworden, daß Hochleistungsinstrumente für Nanotechnologie technisch wesentlich anders zu kennzeichnen und zu charakterisieren sind als Hochleistungsinstrumente für Nanorelativtechnologie. Das zeigt sich durch technische charakteristische spezielle Merkmale darin, daß eines der empfindlichsten Drehpendel, das überdies speziell für die Registrierung systematischer Driftbewegungen der festen Erde durch starke Gezeitenkräfte hergestellt ist, das Gezeiten-Horizontalpendel, im Hinblick genau darauf, nämlich der Registrierung des Driftwinkels der Driftbewegung, schon vom ersten Prototyp der Einarmigen Torsionswaage technisch um das 50000fache überboten worden ist.

Abschließend ist ein letztes Beispiel durch die technischen Daten der Erprobung des Elastischen Kraftlagers zur Kennzeichnung der technischen wesentlichen Merkmale der Erfindung in genau dieser Hinsicht zu geben durch Angabe der horizontalen Driftgeschwindigkeit beider Einarmiger Torsionswaagen: Je mittlere Gezeitenperiode von etwa 6 Stunden oder $t \sim$ 24840 Sekunden lagen die mittleren Driftstrecken der Massenpunkte im Abstand des Trägheitsradius von der Kraftlagerhauptachse beim ersten Prototyp bei ungefähr $s_1 \sim$ 0,24 Millimeter und beim zweiten Prototyp bei ungefähr $s_2 \sim$ 0,9 Millimeter. Daraus folgt unmittelbar: Mit dem ersten Prototyp war die mittlere konstante Driftgeschwindigkeit von ungefähr 10 Nanometer je Sekunde: $v_1 = s_1/t$ = 0,00024 m / 24840 s zu registrieren; somit Driftgeschwindigkeit erste Einarmige Torsionswaage: $v_1 \sim 9{,}7 \cdot 10^{-9}$ m/s

und mit dem zweiten Prototyp 42 Nanometer je Sekunde: $v_2 = s_2/t$ = 0,0009 m/ 24840 s, somit Driftgeschwindigkeit zweite Einarmige Torsionswaage: $v_2 \sim 41{,}7 \cdot 10^{-9}$ m/s.

Bekanntlich hat man erst in jüngster Vergangenheit, und zwar zuerst durch weltweite ozeanographische Vermessungen, später durch Satellitenbestimmungen und Raumbeobachtungen, allmählich die Kenntnis von *vergleichbaren* Größen von genau solchen systematischen Geschwindigkeiten erlangt, und zwar bei der Feststellung, daß sich die riesigen Massen der Ozeanböden und der Erdkontinente in unaufhörlicher langsamer Bewegung gegeneinander verschieben. Es ist bekannt, daß gegenwärtig keine Technik der Echtzeitmessung der Geschwindigkeit dieser als Kontinentaldrift bezeichneten allgemeinen Bewegung zu allgemeiner Verfügung steht. Da dies jedoch eine allgemeine Bewegung ist, so erfaßt sie also auch alle kontinentalen Bodenstationen, und aufgrund der Mitbewegung insbesondere der interkontinentalen Raumbeobachtungsstationen ist es beim heutigen Stand der Technik möglich, daraus auf die mittlere Größenordnung dieser Driftgeschwindigkeit zu schließen. Dabei kommt die gleiche Größenordnung "Nanometer je Sekunde" heraus, hier etwas weniger, dort etwas mehr.

Der große Nachteil dieser heutigen Methoden und Verfahren ist, daß dies keine Echtzeitmessung am Ort des Geschehens ist, sondern ein Ergebnis von statistischen Auswertungen aus vielen Raumbeobachtungen. Das erfordert jedoch erstens einen enormen technischen Aufwand; und dieses vorzulegen kann zweitens immer noch Monate bis Jahre dauern. Den Anwender, der dann noch daran interessiert ist, findet man nur in Wissenschaft und Theorie, aber nicht im Kreis der Hersteller von Meßgeräten in Wirtschaft und Industrie.

Wichtig für die zusammenfassende technische Charakteristik der Erfindung, und für die dabei zu sehende sowohl praktische als auch übergreifende Bedeutung, ist dabei vor allem der technische Umstand, daß speziell das Horizontalpendel als Mittel der Wahl schon lange vor Alfred WEGEMER bekannt war, der die Kontinentaldrift als Erster erkannt und wissenschaftlich beschrieben hat:

Aber es ist technisch damit nicht gelungen - und zwar weder mit diesem, speziell für die hochempfindliche Registrierung seismischer Erschütterungen und kleinster Bodenverschiebungen technisch hergestellten Gerät, noch mit irgendeinem anderen heute bekannten technischen Mittel der modernen Seismik, der modernen Gravimetrie, der modernen Geodäsie, der modernen Geophysik, usw. - eine Driftgeschwindigkeit der Standorte der Geräte physikalisch direkt zu erfahren und wiederholbar messen, welche genau jene Größenordnung hat, die mit Blick auf eine meßtechnisch verläßlich basierte physikalische Verifizierung der Vorhersage der Kontinentaldrift schon seit fast einem Jahrhundert auf der Tagesordnung steht. Die erste Bestätigung dafür ergab sich erst in den letzten Jahrzehnten mithilfe der vorgenannten ganz anderen technischen Mittel- im Zusammenhang der modernen Raumfahrt.

Mit deren Mitteln war bisher aber die zentrale technische Aufgabe der Echtzeitmessung dieser allgemeinen Bewegung direkt auf der Erde selbst technisch ebensowenig zu lösen, wie das in der beschriebenen Weise auch bisher schon unmöglich war mit den technischen Mitteln der Mechanik

So gibt der aktuelle Stand von Wissenschaft und Technik damit ganz von selbst ein weiteres Merkmal an die Hand, womit abzulesen ist, worin wesentliche Unterschiede zu bekannter Technik bestehen, und worin bereichsübergreifende charakteristische Merkmale der Erfindung zu sehen sind, und wo und wie diese sich im Zusammenhang aller vorgenannten speziellen technischen Merkmale der Erfindung in das allgemeine Unterscheidungs- und Abgrenzungskriterium von Technik für Nanotechnologie oder von Technik für Nanorelativtechnologie einordnen.

Zusammenfassend ist zu sehen, daß dasjenige technische Mittel, womit jene technischen Mittel hergestellt sind, womit dieses vorstehend Genannte technisch umgesetzt und meßtechnisch verwirklicht worden ist, das technische Kernstück der Erfindung bildet.

Dieses ist nicht die Einarmige Torsionswaage, sondern das Elastische Kraftlager, weil damit die Einarmige Torsionswaage technisch hergestellt ist.

Die Einarmige Torsionswaage ist dabei als ein in besonderer Weise damit technisch ausgeführter, technisch geführter, und technisch gestalteter Geräteträger zu kennzeichnen.

Darum wird zusammenfassend nur ein einziger unabhängiger Patentanspruch erhoben, der die technischen Merkmale des Elastischen Kraftlagers oder Elastischen Mehrwellentorsionsgetriebes kennzeichnet, und wird der Schutz der Erfindung dafür beansprucht.

Erfindungsgemäße technische Lösungen, die dabei bestehen, wie beispielsweise die Einarmige Torsionswaage, sind als davon abhängige technische Merkmale gekennzeichnet worden, und es wird der Anspruch auf den Schutz der Erfindung damit ausdrücklich auch für diese Teile der Erfindung gefordert.

### 4. Beschreibung der Figuren und Erläuterung der Bezugszeichen

**Figur 1 - Elastisches Kraftlager für Einarmige Torsionswaage mit zwei Torsionswellen für Nanorelativtechnologie**

1 - Tragfaserlager im Kraftlagerrahmen: oberes Führungslager
2 - Tragfaser: Führungswelle oben
3 - Kraftlagerrahmen, Montagerahmen (Führungsgestell) des Elastischen Kraftlagers
4 - Tragfaserlager im Geräteträger: unteres Führungslager der Tragfaser
5 - Hebelfaserlager im Geräteträger: oberes Führungslager der Hebelfaser
6 - Geräteträger: Einarmige Torsionswaage
7 - Wirkungskörper für neutrale Wechselwirkung und mechanische Kraftverstärkung: Bleikörper,...
8 - transportierte technische Nutzgeräte: Vorzugsweise Meßgeräte, wie Laserrichtüngsstrahler
9 - Hebeffaser: Führungswelle unten
10 - Hebeffaserlager im Kraftlagerrahmen: unteres Führungslager der Hebelfaser
11 - Spannvorrichtung für Verlängerungs-Ausgleich der Faser sowie Hubvorrichtung und Höhensteuer für Geräteträger
12 - Schutzgehäuse für das Elastische Kraftlager und für die Einarmige Torsionswaage
0 - Hauptachse des Elastischen Kraftlagers, vertikal: Bezugsachse für resultierendes Rückstellmoment der elastischen Querkraft der Torsionswellen in horizontaler Richtung
0' - Hauptachse des Elastischen Kraftlagers, horizontal: Bezugsachse für resultierendes Rückstellmoment der elastischen Längskraft der Torsionswellen in vertikaler Richtung
$F_A$ - Resultierende Antriebskraft der Bewegung der Einarmigen Torsionswaage in horizontaler Richtung (neutrale Feldkraft durch neutrale Masse des Wirkungskörper, mechanische Reaktionskraft, usw.)
$F_Z$ - Resultierende Übergewichtskraft der Gewichtsmasse der Einarmigen Torsionswaage
$a$ - Lagerarm und Kraftarm der Kraftverstärkung der Übergewichtskraft: Abstand zwischen Hebelfaserlager und Tragfaserlager

*b* - Kraftarm der Übergewichtskraft: Mittelpunktsabstand des Übergewichtes vom vorderen Tragwellenlager

*r* - Dreharm des resultierenden Eigenträgheitsmomentes der Einarmigen Torsionswaage bezüglich ihrer resultierenden Hauptträgheitsachse und bezüglich der vertikalen Kraftlagerhauptachse

$F_1$ - Spannkraft der Tragfaser: faserparallele kraftlager-verstärkte Zugkraft oben

$F_2$ - Spannkraft der Hebelfaser: faserparallele kraftlager-verstärkte Zugkraft unten

**Figur 2 - Elastisches Kraftlager für Einarmige Torsionswaage mit vier Torsionswellen für Nanorelativtechnologie**

1 - Parallele Tragfaserlager im Kraftlagerrahmen

2 - Parallele Tragfasern für Verminderung von Horizontalbewegungen

3 - Kraftlagerrahmen, Führungsgestell des Elastischen Kraftlagers

4 - Parallele Tragfaserlager für vorzugsweise Vertikalbewegungen

5 - Parallele Hebelfaserlager für vorzugsweise Vertikalbewegungen

6 - Geräteträger: Einarmige Torsionswaage für vorzugsweise Vertikalbewegungen

7 - Wirkungskörper für neutrale Wechselwirkung und mechanische Kraftverstärkung: Bleikörper,...

8 - transportierte technische Nutzgeräte: Vorzugsweise Meßgeräte, wie Laserrichtungsstrahler

9 - Parallele Hebelfasern für Verminderung von Horizontalbewegungen

10 - Parallele Hebelfaserlager im Kraftlagerrahmen für zwei Hebelfasern

11 - Spannvorrichtung für Verlängerungs-Ausgleich der Faser sowie Hubvorrichtung und Höhensteuer für Geräteträger

12 - Schutzgehäuse Elastisches Kraftlager und Einarmige Torsionswaage

0 - Hauptbezugsachse des Elastisches Kraftlagers, vertikal

0' - Hauptbezugsachse des Elastisches Kraftlagers, horizontal

$F_A$ - Antriebskraft der vorzugsweisen Vertikalbewegung der Einarmigen Torsionswaage

$F_Z$ - Übergewichtskraft der Gewichtsmasse der Einarmigen Torsionswaage

*a* - Lagerarm und Kraftarm der Kraftverstärkung der Übergewichtskraft

*b* - Kraftarm der Übergewichtskraft

*r* - Dreharm des resultierenden Eigenträgheitsmomentes der Einarmigen Torsionswaage

$F_1$ - Spannkraft beider Tragfasern: faserparallele kraftlager-verstär kte Zugkraft oben

$F_2$ - Spannkraft beider Hebelfasern: faserparallele kraftlager-verstärkte Zugkraft unten

**Figur 3 - Elastisches Kraftlager für Einarmige Torsionswaage mit zwei Torsionswellen in Kombination mit nichtneutralem Kraftfeldantrieb**

1... 12; $F_A$... *b*: gleiche Bedeutung wie in Figur 1 oder Figur 2

+ - Spannungsversorgung zur bewegten Ladung (Ko) und zum ruhenden Kondensator (z.B. im Schutzgehäuse)

L+- Anschlüsse der Kabel zur Stromversorgung der Laserstrahler

Ko Elektrische Nutzlast: Kondensator

Mg Magnetische Nutzlast: Permanentmagnet

Ak Bleikörper: Wirkungskörper / Antriebskolben, wirkend durch schwere und träge neutrale Masse

La Richtstrahler zur Bewegungsanzeige, z.B. Laserdiode mit Strahloptik/Elektronik

**Figur 4 - Beispiel bekannter Stand der Technik: Torsionsprüfgerät für Materialprüfung polymerer Werkstoffe mit Schwungkörper nach DIN 53445**

1 - obere Einspannklemme, mit fester Achse

2 - Probekörper

3 - Wärmekammer

4 - Kammergehäuse

5 - untere Einspannklemme

6 - Verbindungswelle

7 - symmetrischer Schwungkörper

**Figur 5 - Beispiel bekannter Stand der Technik: Torsionsprüfgerät für Materialprüfung polymerer Werkstoffe mit entlasteter Torsionswelle nach DIN 53445**

1 - Gegengewicht zur Entlastung von Schwungscheibe und Probekörper
2 - Torsionswelle für Schwungscheibe und Probekörper
3 - symmetrische Schwungscheibe
4 - Verbindungswelle
3,4,5: Schwungkörper
5 - obere Einspannklemme
6 - Probekörper
7 - Wärmekammer
8 - Kammergehäuse
9 - untere Einspannklemme

**Figur 6 - Beispiel bekannter Stand der Wissenschaft: Einfaden-Torsionswaage für geologische Erkundung von R. v. EÖTVÖS**

1 - Torsionsfaden aus Metall, Platin-Iridium-Legierung, etwa 0,045 mm Durchmesser
Sp - Spiegel, der sich mit dem Torsionsfaden mitdreht
2 - Gewichtskörper, der sich mit dem Drehbalken mitdreht auf oberem Höhenniveau
3 - Dreharm, Wägebalken
4 - Gehäuse der Drehwaage und Standgestell
5 - Gewichtskörper auf tieferem Höhenniveau; mittels Faser unter den Wägebalken gehängt
6 - hingehender Lichtstrahl zum Drehspiegel
7 - reflektierter Lichtstrahl zum Ableseschirm oder zur Registriervorrichtung

**Figur 7 - Beispiel bekannter Stand der Wissenschaft: Einfaden-Torsionspendel für Test von allgemeinrelativistischer Erwartung von W. B. BRAGINSKI/W. I. PANOW**

1 - Vakuumkammer, Gehäuse
2 - obere Halteklemme der Torsionswelle
3 - Torsionswelle aus Metall Wolframfaden von etwa 0,005 mm Durchmesser
4 - untere Halteklemme der Torsionswelle
5 - Drehspiegel zur Winkelregistrierung: Helium-Neon-Licht wird auf rotierende Filmtrommel reflektiert
Pt - Platinkörper von großer Volumendichte der Gewichtsmasse am Drehkreuz
Al - Aluminiumkörper von kleiner Volumendichte der Gewichtsmasse am Drehkreuz

**Figur 8 - Zum Wirkungsprinzip des erfindungsgemäßen Elastischen Kraftlagers oder Mehrwellentorsionsgetriebes für eine Einarmige Torsionswaage**

0 - Drehachse
K - Drehkörper: Ausrichtung der Drehachse parallel zu den Feldlinien des Erdschwerefeldes am Ort des Beobachters
$r$ - Abstand der Drehachse von der Schwerelinie durch den Massenmittelpunkt des Drehkörpers = "Kraftarm" des wirkenden Feldkraftmomentes
$g_s$ - Feldstärke der allgemeinen Massenanziehung in Richtung Sonne; Anziehungsbeschleunigung zur Sonne als neutrale Kraftquelle eines neutralen Kraftfeldes
$D$ - Drehmoment
$D$ = max: Drehmoment = maximal, da in dieser Stellung der Kraftarm bezüglich der der neutralen Kraftquelle die *größte Länge* erreicht
$D$ = min: Drehmoment = minimal, da in dieser Stellung die Drehwirkung des Kraftarms bezüglich der Kraftquelle *verschwindet*

**Figur 9 - Zum Wirkungsprinzip bekannter Torsionsmeßinstrumente unter gleichen Bedingungen**

0 - Mittelpunkt der Drehwaage = Drehpunkt
$r$ - symmetrischer Abstand des gemeinsamen Mittelpunktes gegenüberliegender Massenschwerpunkte des Torsionskörpers = "Kraftarm" des wirkenden Feldkraftmomentes
$g_s$ - Feldstärke der allgemeinen Massenanziehung in Richtung Sonne; Anziehungsbeschleunigung zur Sonne als neutrale Kraftquelle eines neutralen Kraftfeldes
$D$ - Drehmoment

$D = 0$:  Drehmoment = Null, weil in dieser Stellung die Drehmomente sich gegenseitig *kompensieren*

$D = 0$:  Drehmoment = Null, weil in dieser Stellung der Kraftarm bezüglich der Kraftquelle *verschwindet*

**Figur 10 - Elastisches Kraftlager oder Mehrwellentorsionsgetriebe für Materialprüfung in Kombination mit bekannter Lagertechnik**

1 -  oberes Klemmlager und Traglager für oberen Prüfkörper zur Reiß-, Festigkeits-, Torsions-Prüfung, usw.

2 -  oberer Prüfkörper, oder auch: Normalkörper/Vergleichskörper

3 -  Kraftlagerrahmen; Führungsgestell

4 -  unteres Klemm-/Einhängelager für unteren Prüfkörper/Normalkörper

5 -  oberes Klemm-/ Einhängelager für unteren Prüfkörper/Normalkörper

6 -  Geräteträger

7 -  Übergewicht, z.B. Laufgewicht

8 -  Nutzlast, wie mitbewegte Meßgeräte für (Laser-)Richtwinkelanzeige

9 -  unterer Prüfkörper, unterer Vergleichskörper

10 -  unteres Klemmlager, unteres Einhängelager für den unteren Prüfkörper

10a-  flexible Spannwelle

11 -  Spannvorrichtung; Höhenverstellvorrichtung

12 -  Schutzgehäuse

$F_Z$ -  Übergewichtskraft

$F_1$ -  Materialprüfkraft/Längs- und Zugkraft des Materials des oberen Prüfkörpers

$F_2$ -  Materialprüflcraft/Längs- und Zugkraft des Materials des unteren Prüfkörpers

$F_{1\omega}$-  Materialprüfkraft/Quer- und Schubkraft des Materials des oberen Prüfkörpers

$F_{2\omega}$-  Materialprüfkraft/Quer- und Schubkraft des Materials des unteren Prüfkörpers

$F_\omega$-  resultierendes Rückstellmoment des Elastischen Kraftlagers/Mehrwellerrtorsionsgetriebes

**Figur 11 - Zeichnung zur Zusammenfassung (wie Figur 10; ohne Bezugszeichen)**

Zur Beschreibung gehören insgesamt zehn (10) Figuren auf acht (8) Blättern:

Nr. 1/7 bis Nr. 7/7; plus eine (1) Zeichnung zur Zusammenfassung

**Patentansprüche**

1. **Elastisches Kraftlager oder Elastisches Mehrwellentorsionsgetriebe für Einarmige Torsionswaagen und Torsionsschwerependel für Nanorelativtechnologie**

   - mit elastischen Wellen (2,9) für Präzisionsmaschinen und Präzisionsmessinstrumente sowie für Meßgeräte und Prüfgeräte,
   - mit einer Anordnung der äußeren Lager (1,10) der elastischen Wellen (2,9) eines starren Geräteträgers (6) in einem starren Rahmen (3) mit einem Versetzungsabstand null,
   - mit einer hohen Kraftverstärkung durch Anordnung eines Beschwerungskörpers (7) an dem starren Geräteträger (6) in einem großen Abstand (*b*) in bezug auf einen kleinen Abstand (*a*) der Trägerlager (4,5) der elastischen Wellen (2,9),
   - mit einer Erhaltung einer stetigen kontinuierlichen, festen kleinen Dehnung durch eine feste Zugspannung an der Dehngrenze zum langsamen plastischen Kriechen, mit den elastischen Wellen (2,9) aus einem synthetischen Material, vorzugsweise aus einem hochpolymeren Material, wie Dyneema, Spinnfasern aus Polyamid, Aramid oder Kevlar, und
   - mit einer Vorrichtung (11) zur Kompensation der Dehnung, Steuerung der Spannkräfte und Regulierung des Neigungswinkels des Geräteträgers (6), beispielsweise durch eine im unteren Rahmenprofilhohlraum eingebaute Umlenkrolle mit selbstarretierender Rutschfederkupplung.

2. **Elastisches Kraftlager oder Elastisches Mehrwellentorsionsgetriebe nach Anspruch 1** in einem Meßinstrument für die Messung der Wirkung von Feldstärkeänderungen von vom Schwerefeld unabhängigen neutralen Kraftfeldern oder in einem Meßinstrument für seismische Bodenbewegungen oder Bodenneigungen.

3. **Elastisches Kraftlager oder Elastisches Mehrwellentorsionsgetriebe nach Anspruch 1 oder 2,** wobei der starre Rahmen (3) beispielsweise aus einem Aluminium-Hohlprofil besteht und wobei Nutzlasten (8) auf dem starren Geräteträger (6) angeordnet sind, wie beispielsweise ein Laserrichtungsstrahler (La) mit externer Stromversorgung (L+-), und / oder wie ein elektrische Testladung und Kondensator (Ko), und/ oder wie ein magnetische Testladung und Dauermagnet (Mg).

4. **Elastisches Kraftlager oder Elastisches Mehrwellentorsionsgetriebe nach Anspruch 1 oder 3** in einer Benutzung des Geräteträgers (6) als Torsionsschwerependel durch waagerechte Horizontalanordnung des Rahmens (3).

5. **Elastisches Kraftlager oder Elastisches Mehrwellentorsionsgetriebe nach einem der Ansprüche 1 - 4,** wobei die elastischen Wellen (2,9) als Mehrfachwellen ausgebildet sind.

6. **Elastisches Kraftlager oder Elastisches Mehrwellentorsionsgetriebe nach Anspruch 1, 3 oder 5** in einem Prüfgerät für die Werkstoffprüfung elastischer Körper, auch in Kombination mit bekannter Lagertechnik, wie Kugellager, Gelenklager, oder Schneidenlager.

## Claims

1. **Elastic Power Bearing or Elastic More Shaft Torsion Driving Gear for One-armed torsion balances and Torsion gravitional pendulums forfor Nanorelative-Technology**

   - with elastic shafts (2, 9) for precision machines and precision measuring instruments as well for the test instruments and test devices,
   - with an arrangement of the external bearings' (1,10) the elastic shafts' (2, 9) a rigid tool carrier's (6) in a rigrid frame (3) with a dislocation separation zero,
   - with a high power reinforcement through arrangement of a weighting body (7) at the rigid tool carrier (6) in a great separation (*b*) with respect to a small separation (*a*) the carrier bearings' (4,5) the elastic shafts' (2,9),
   - with a retention a steady continuous, solid small distension through a solid tensile stress at the proof stress to the slow plastic creep, with the elastic shafts (2,9) of a synthetic material, preferably of a high polymer material, as Dyneema, viscose rayon staple fibres of polyamide, aramide or kevlar, and
   - with a device (11) for the compensation of the distension, operation of the the tonicities and and regulation of the helix angle of the tool carrier, for example through one in the lower frame section cavity assembled deflection sheave with self stopping slide spring coupling.

2. **Elastic Power Bearing or Elastic More Shaft Torsion Driving Gear according to claim 1** in a measuring instrument for the measuring of the effect of field strength changes of neutral fields of force, independent of the gravitational field or in a measuring instrument for seismic bottom motions or gradients of ground.

3. **Elastic Power Bearing or Elastic More Shaft Torsion Driving Gear according to claim 1 or 2,** at which for example the rigid frame (3) consists of an aluminium hollow profile and at which payloads (8) are ordered on the rigid carrier (6) as for example a laser directional radiator (La) with external power supply (L+-), or a test charge (Ko), or a measuring permanent magnet (Mg).

4. **Elastic Power Bearing or Elastic More Shaft Torsion Driving Gear according to claim 1 or 3** in a use of the tool carrier (6) as Torsion gravitational pendulums through horizontal horizontal arrangement of the frame (3).

5. **Elastic Power Bearing or Elastic More Shaft Torsion Driving Gear after one of the claims 1-4,** at which the elastic shafts (2,9) are developed as multiple shafts.

6. **Elastic Power Bearing or Elastic More Shaft Torsion Driving Gear according to claim 1, 3 or 5** in a test equipment for the material testing of elastic bodies, also in combination with known bearing technology, as ball bearings, spherically seated bearings, or guide bearings.

## Revendications

1. **Palier de Force Élastique ou Transmission Élastique avec plusieurs arbres de torsion pour Balances Manchotes de Torsion et Pendules de Gravité de Torsion pour l'Nano-Relative-Technologie**

- avec arbres élastiques (2,9) pour des machines de précision et des instruments de mesure de précision aussi bien que pour des instruments et des appareils d'essai,

- avec un disposition des coussinets extérieurs (1,10) des arbres élastiques (2,9) de un porteur d'appareil rigide (6) en un cadre rigide (3) avec une distance de mutation zéro,

- avec un haut renforcement de force à travers l'disposition d'un corps de chargement (7) au porteur d'appareil rigide (6) dans une grande distance (*b*) par rapport à une petite distance (*a*) des coussinets de porteur (4,5) des arbres élastiques (2,9),

- avec une conservation une incessant continus, fixes petit extension à travers une tension de traction fixe à la frontière de la ductilité au lent plastique la reptation, avec les arbres élastiques (2,9) d'une matière plastique, de préférence d'un matériel polymère haut, comme des Dyneema, fibres filandreux de polyamide, Aramid ou Kevlar, et

- avec un dispositif (11) pour la compensation de l'extension, à la commande des forces de tension et pour le règlement de l'angle d'inclinaison du porteur d'appareil (6), par exemple à travers une dans la cavité de profil du cadre inférieure incorporé rôle de détourner avec plume-glissement-accouplement freinant même.

2. **Palier de Force Élastique ou Transmission Élastique avec Plusieurs Arbres de torsion après la prétention 1** dans un instrument de mesure pour la mesure de l'effet de changements d'intensité du champ des champs de force neutres indépendants du champ gravitationnel ou dans un instrument de mesure pour des mouvements de sol sismiques ou des inclinaisons de sol.

3. **Palier de Force Élastique ou Transmission Élastique avec Plusieurs Arbres de torsion après la prétention 1 ou 2,** auxquels le cadre rigide (3) se compose par exemple d'un profil creux d'aluminium et auxquels les charges utiles (8) sont ordonnées sur le porteur d'appareil rigide (6), comme par exemple un spot de direction de laser (La), et / ou comment une charge de test électrique et condensateur (Ko), et / ou comment une charge de test magnétique et aimant permanent (Mg).

4. **Palier de Force Élastique ou Transmission Élastique avec Plusieurs Arbres de torsion après la prétention 1 ou 3** dans une utilisation du porteur d'appareil (6) comme Pendule de Gravité de Torsion à travers un disposition horizontal du cadre (3).

5. **Palier de Force Élastique ou Transmission Élastique avec Plusieurs Arbres de torsion à une des prétentions 1 - 4,** auxquelles les arbres élastiques (2,9) sont formés comme des arbres multiples.

6. **Palier de Force Élastique ou Transmission Élastique avec Plusieurs Arbres de torsion après la prétention 1, 3 ou 5** dans un appareil d'essai pour l'essai des matériaux des corps élastiques, aussi dans la combinaison avec de la technique de palier connue, comme des roulements à billes, des paliers d'articulation, ou des paliers de découpe.

# Figur 1

# Figur 2

# Figur 3

## Figur 4

## Figur 5

## Figur 6

## Figur 7

# Figur 8

Sonne

$g_s$

$D = max$

K

$r$

0

Erde

$D = min$ $D = min$

$g_s$

$g_s$

$g_s$

$g_s$

$g_s$

$D = max$

# Figur 9

Sonne

$g_s$

$D = 0$

$r$

0

$r$

Erde

$D = 0$ $D = 0$

$g_s$

$g_s$

$g_s$

$g_s$

$D = 0$

# Figur 10